(19) Europäisches Patentamt
European Patent Office
Office européen des brevets

(11) EP 3 056 891 B1

(12) **EUROPÄISCHE PATENTSCHRIFT**

(45) Veröffentlichungstag und Bekanntmachung des Hinweises auf die Patenterteilung:
**27.09.2017 Patentblatt 2017/39**

(51) Int Cl.:
***G01N 3/36*** *(2006.01)*

(21) Anmeldenummer: **16153443.3**

(22) Anmeldetag: **29.01.2016**

(54) **MATERIALPROBENHALTER MIT ANSTEUEREINHEIT**

MATERIAL SAMPLE HOLDER WITH CONTROL UNIT

SUPPORT D'ECHANTILLON DE MATERIAU COMPRENANT UNE UNITE DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2015 DE 102015201993**

(43) Veröffentlichungstag der Anmeldung:
**17.08.2016 Patentblatt 2016/33**

(73) Patentinhaber: **Zwick GmbH & Co. KG**
**89079 Ulm (DE)**

(72) Erfinder: **Ganser, Franz**
**88471 Laupheim (DE)**

(74) Vertreter: **Cremer, Christian**
**Cremer & Cremer**
**Patentanwälte**
**St.-Barbara-Straße 16**
**89077 Ulm (DE)**

(56) Entgegenhaltungen:
**CN-B- 101 608 987**
**DE-B1- 1 552 653**
**DE-T5-112006 003 923**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft einen Halter mit einer Ansteuereinheit, insbesondere als Teil einer Materialprüfmaschine zur Prüfung von Materialproben, z. B. von metallischen Materialproben. Die Ansteuereinheit arbeitet mit einem unter Druck stehenden Fluid aus einer Druckquelle, z. B. einer Pumpe. Mit anderen Worten, die Ansteuereinheit ist gemäß dem Oberbegriff von Anspruch 1 konfiguriert. Der Halter arbeitet mit einer fluidischen Schaltung einer Materialprüfmaschine zusammen. Die Erfindung betrifft gleichermaßen eine Materialprüfmaschine gemäß dem Oberbegriff von Anspruch 14, wobei eine Spannkraft, z. B. zum Halten einer Materialprobe, besonders sicher angelegt werden kann. Nach einem dazugehörigen Verfahren - gemäß Oberbegriff von Anspruch 15 - kann ein solcher Halter betrieben werden. Durch das Verfahren kann ein Aktor in Stellung gebracht werden, d. h., ein Schließbetrieb und ein Spannbetrieb sind durch die Ansteuerung realisierbar.

## Technisches Gebiet

Bekanntermaßen bergen Materialprüfmaschinen, insbesondere für metallische Proben, aufgrund ihrer zum Teil hohen Kräfte (je nach Prüfung bis in den Bereich von Mega-Newton, z. B. 5 MN) gewisse Gefahren für Nutzer der Materialprüfmaschinen. Sehr häufig werden Proben in Materialprüfmaschinen mit Kräften in einem Bereich von Kilo-Newton, z. B. bis zu 250 kN, belastet, wobei ein hohes inhärentes Gefahrenpotential bereits bei weniger als der Maximallast, anders gesagt, bei Einhaltung einer Materialbelastungsgrenze vorliegt. Eine der Gefahren entstammt den doch beachtlichen Spannkräften, die so hoch sein müssen, dass die Probe während einer Materialprüfung sicher in dem oder den Probehalter(n) positioniert bleibt. Daher kommt den Haltern, präziser formuliert, den Probehaltern eine besondere Aufmerksamkeit zu.

Die Halter gibt es in unterschiedlichen Ausführungsformen. Besonders vorteilhaft sind zentrierende Spanner bzw. Zentrierspanner, die eine Ausrichtung der Probe in Richtung auf eine gewünschte Prüfachse erleichtern. Solche Zentrierspanner lassen sich z. B. in der EP 2 677 296 A2 (Anmelderin: Zwick GmbH & Co. KG; Prioritätstag: 22.06.2012) studieren. Dieser Typ und ähnliche Typen Halter werden dann wiederum in Materialprüfmaschinen eingebaut, sodass eine Materialprüfmaschine über entsprechende Halter eine Prüfprobe aufnehmen kann.

Die Materialprüfmaschinen werden üblicherweise zur Ermittlung von Materialeigenschaften verwendet, insbesondere zur Materialprüfung von Metallen. Hierfür wird eine Prüfvorrichtung benutzt, welche der Aufnahme der zu prüfenden Materialprobe dient. Auch die Prüfvorrichtung kann auf verschiedenste Arten und Weisen realisiert sein. Z. B. lassen sich mit sogenannten Hebelarmprüfmaschinen Prüfmessungen mit Zugkräften durchführen. Hierbei wirkt auf die Prüfprobe eine Zugkraft, die durch einen Hebelarm übersetzt wird. Näheres zu diesem Typ Prüfmaschine ist in dem Patent DE 11 2009 005 323 B4 (Patentinhaberin: Messphysik Materials Testing GmbH; Anmeldetag 17.10.2009) beschrieben. Einen weiteren Typ Prüfvorrichtung beschreibt die Patentschrift DE 11 2006 003 923 B4 (Patentinhaberin: Shimadzu Corp.; Anmeldetag: 12.06.2006). Dieser Typ Materialprüfmaschine enthält ein Säulenelementepaar und einen sich dazu längs erstreckenden Stützpfosten. Die Prüfprobe wird bei diesem Typ an einen Befestigungsansatz einer Anbringungseinheit angebracht, mit anderen Worten, an einen bestimmten Halter. Die Quertraverse wird bei so aufgebauten Materialprüfmaschinen von dem Stützpfosten getragen und ermöglicht hierdurch eine Materialprüfung durch Gleiten entlang des Stützpfostens. Eine Materialprüfmaschine mit zwei Probenaufnahmen, wobei eine Probeaufnahme fest im Grundrahmen verankert ist, wird in der Druckschrift DE 10 2009 036 247 A1 (Anmelderin: Zwick GmbH & Co. KG; Anmeldetag: 05.08.2009) beschrieben. Diese Prüfmaschine weist zwei Probenaufnahmen, insbesondere zur Prüfung in Druck- und Zugversuchen an Federn und elastischen Bauteilen, auf. Bei diesem Typ Prüfvorrichtung ist eine Probeaufnahme an einem verfahrbaren Stellelement angebracht. Die Materialprüfung erfolgt durch die Erfassung der Messdaten mittels einem Wegaufnehmer und einem Kraftaufnehmer.

Wie zuvor schon angeklungen, ein kritischer Moment während einer Materialprüfung ist das Einspannen der Materialprobe, in dessen Verlauf sich Unfälle, z. B. aufgrund nicht ausreichender Aufmerksamkeit des Bedienpersonals, ereignen können. Aufgrund der mit der Materialprüfung verbundenen Kräfte führen viele Unfälle zu erheblichen Verletzungen bei den Unfallopfern.

Das Spannen ist aber aus Reproduzierbarkeitsgründen, aus Gründen der verlässlichen Prüfung und aus Gründen der Fehlerreduktion nicht zuletzt in dem technischen Gebiet der Materialprüfung wichtig. Aus diesem Grund werden immer wieder Spannmechanismen in der einschlägigen Literatur vorgeschlagen, die entweder die Unfallvermeidung oder die Fehlerfreiheit des Spannens oder die Schnelligkeit des Spannens oder die Verlässlichkeit des Spannens in den Vordergrund rücken.

## Stand der Technik

Aufgrund der Gefährdungslage und in Übereinstimmung mit einschlägigen Maschinenrichtlinien gibt es z. B. den Ansatz, mittels Tippbetrieb mit einer ersten, die Befestigung der Probe vornehmenden Schließbewegung und einer anschließenden, mit deutlich höheren Haltekräften ausgestatteten Spannphase zu operieren. Eine besonders vorteilhafte pneumatische oder hydraulische Schaltung, mit anderen Worten eine fluidische Schaltung, lässt sich der DE 10 2012 101 459 A1 (Anmelderin: Zwick GmbH & Co. KG; Anmeldetag: 23.02.2012) auch als EP 2 631 496 A2 (Anmelderin: Zwick GmbH & Co. KG, Prioritätstag: 23.02.2012) veröffentlicht, entnehmen.

Eine solche Schaltung bietet das gewünschte Maß an Sicherheit, sie benötigt aber eine gewisse Zeit, bis die eigentliche Prüfung stattfinden kann, was sich u. a. aus dem Tippbetrieb ergibt. Insbesondere bei regelmäßigen Prüfungen oder bei Prüfungen von einer größeren Charge Materialproben stellt das Spannen jeder einzelnen Materialprobe einen effektivitätsbegrenzenden bzw. einen durchsatzbegrenzenden Faktor bei einer solchen Schaltung für die fluidische Ansteuerung der Spannbacken dar.

In der DE 39 12 075 A1 (Anmelderin: Bundesanstalt für Materialforschung und -prüfung; Anmeldetag: 10.04.1989) wird das Problem artikuliert, dass in einer Prüfvorrichtung Verformungswege und Prüfmaschinennachgiebigkeiten zu vermeiden sind. Daher nutzt die dort vorgestellte Prüfvorrichtung eine einen Kraftnebenschluss bildende Vorrichtung. Die Kraftnebenschlussvorrichtung soll eine von einer Kraftangriffsvorrichtung auf eine andere Kraftangriffsvorrichtung wirkende, die in den beiden Probeneinspannvorrichtungen befindliche Probe überbrückende Vorspannkraft führen können. Der Prüfvorgang startet nach dem Einspannen der Probe mit einer noch unbelasteten Probe, während die Prüfmaschine auf einen Wert vorbelastet wird.

Die CN 101 608 987 A1 (Anmelderin: Taiyuan Heavy Machinery Joint; Prioritätstag: 24.07.2009) beschreibt einen anderen Typ einer Materialprüfvorrichtung. Die in der CN 101 608 987 A1 gezeigte hydraulische Schaltung soll eine Klemmvorrichtung mit Kolben spannen können, die ein aufdehnbares Rohr einklemmen kann. Über Entfernungssensoren in Zylindern wird die Position der Kolben gemessen. In Abhängigkeit der Messsignale lässt sich ein Entlastungsventil betätigen. Während eines Drucktests an dem Rohr kann bei einer Überlast in der hydraulischen Schaltung das Entlastungsventil geöffnet werden. Dadurch soll ein Schutz der Schaltung vorgenommen werden. Mit anderen Worten, in der CN 101 608 987 A1 wird das Thema der Vermeidung von Spitzendrücken bei von dem Prüfkörper erzeugten Rückwirkungen in der dort vorgestellten hydraulischen Schaltung erörtert.

Das Patent DE 28 39 341 C3 (Inhaberin: Daimler-Benz AG; Offenlegungstag: 13.03.1980) betrifft Schaltungen mit pneumatischen Flip-Flops, wobei ein Flip-Flop in einem "Hochdruckbereich" von bis zu 8 bar arbeiten soll. Ein Flip-Flop soll sich immer, unabhängig davon, ob an seinem Eingang ein Signal anliegt oder nicht, in einem stabilen Zustand befinden. Als Einsatzbereich einer solchen Schaltung wird auf Spannvorrichtungen hingewiesen, z. B. für Werkzeuge, die mit einem Arbeitszylinder gespannt werden. Zwar ist allgemein bekannt, dass das Spannen von Werkstücken zu Materialbearbeitungen anderen Erfordernissen genügen muss als für Werkstoffprüfungen, jedoch wird in einem Ausführungsbeispiel ein Betrieb über eine Zwei-Hand-Steuerschaltung für pneumatische Spannvorrichtungen erwähnt, die verhindern soll, dass versehentlich eine Hand zwischen den zugehenden Arbeitszylinder und das zu spannende Werkstück gelangen kann. Die pneumatische Schaltung gemäß Figur 1 der DE 28 39 341 C3 arbeitet mit vier 5/2-Ventilen, die mittels Steuerdruck gestellt werden. Als Sicherheitsmaßnahme wird vorgeschlagen, dass durch die Auslegung und Konfiguration der Bedienung das Bedienungspersonal aufgrund einer Steuerschaltung gezwungen sein sollte, beide Hände beim Schließvorgang der Spannvorrichtung so lange am Impulsgeber zu belassen, bis das Werkstück gespannt ist, anderenfalls erfolgt eine Ventilrückstellung. Abstrahierter wird im hinteren Teil der Patentbeschreibung dann darauf hingewiesen, dass im Endeffekt mit Binärzählern zu operieren sei. Das bedeutet, eine entsprechend komplizierte Schaltung aufgrund der hohen Anzahl an Zählgliedern ist pneumatisch zu realisieren.

In dem Dokument DE 42 28 846 C2 (Patentinhaber: Grüllmeier; Anmeldetag: 29.08.1992) wird ein rein pneumatisch arbeitender, druckübersetzter Arbeitszylinder für einen Eilgang und einen Krafthub beschrieben, der auch zum Festspannen von Werkstücken verwendet werden kann. Für den Eilgang wird der Arbeitskolben auf seiner vollen Fläche mit dem normalen Betriebsdruck über einen ersten Anschluss beaufschlagt. Der Krafthub soll durch das Eintauchen eines Verdrängerkolbens in die, für den Eilgang bereits vorgespannte, Druckluft entstehen. Die Ventilsteuerung, die hierzu verwendet wird, ist jedoch sehr überschaubar. Es sind zwei Ventile vorgesehen, wobei ein erstes Ventil dem Rück- und Eilhub dient, während ein zweites Ventil den Krafthub nach erfolgtem Eilhub zuschalten kann. Eine solche Schaltung dürfte allgemeinen, normungsgemäßen Sicherheitsanforderungen nicht genügen.

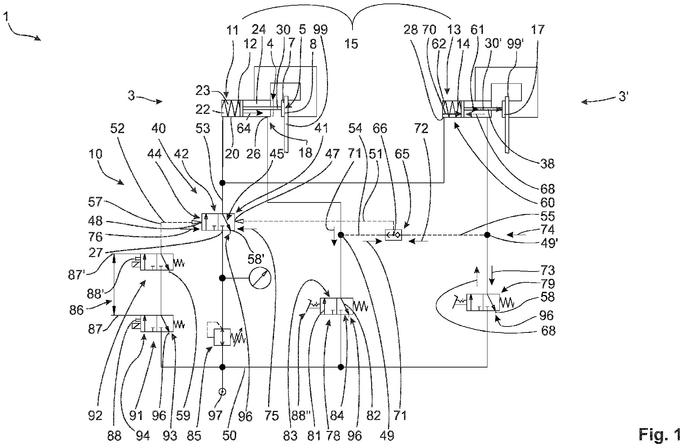

Eine Sicherheitseinrichtung gemäß DE 2 158 700 A (Anmelderin: Festo-Maschinenfabrik Gottlieb Stoll; Anmeldetag: 26.11.1971) soll zum Steuern des Druckmittelflusses zu einer Verbraucherstelle, wie einer Presse, Stanze oder Biegevorrichtung, dienen. Durch die gleichzeitige Betätigung von zwei Handventilen kann von einem Hauptventil ein Druckmitteldurchlass zu einer Verbraucherstelle freigegeben werden. Hierzu ist zu einem "ODER-Glied", das auch als Doppelsteuerventil bezeichnet wird, ein "UND-Glied", das als Zweidruckventil ausgebildet sein soll, parallel geschaltet. Damit wird das Hauptsteuerventil zur Versorgung der Verbraucherstelle betätigt. Der Verbraucherstelle ist in Figur 1 ein sogenanntes Verbraucherventil vorgeordnet, das zylinderartig mit einer Feder auf einer dem Hauptsteuerventil abgewandten Seite eines Kolbens eingezeichnet ist. Die Figur 1 wirkt zumindest in Bezug auf ein Vorhandensein einer Druckquelle unvollständig. Als Begründung zur Herstellung einer höheren Sicherheit wird für die Anordnung aus Verbraucherventil, Hauptventil und Verbraucherstelle erläutert, dass damit die Sicherheitseinrichtung mit einem niedrigen Druck gefahren werden könne. D. h., vorrangig geht es darum, den Druck in der Schaltung zu reduzieren, Spanndrücke zeichnen sich hierzu abweichend aber durch besonders hohe Drücke aus.

Eine pneumatische oder hydraulische Einspannvorrichtung für Werkstücke mit beweglichem und feststehendem Spannteil ist in der DE 1 552 653 C (Patentinhaberin: Fa. J. Gottlieb Peiseler; Anmeldetag: 09.02.1966) beschrieben, wobei das bewegliche Spannteil mit einem Zylinder-Kolbenantrieb gefahren wird und ein handbetätigtes Steuerorgan zwischen dem Zylinder und einer Druckmittelquelle vorgesehen ist. In dem Dokument wird eine als ungefährlich angesehene Kraft von bis zu 15 kp (ungefähr 150 Newton) erwähnt. Die Sicherheitsfunktion wird im Wesentlichen über einen Stößel und einen Mitnehmer in Form einer Stellschraube realisiert, die auf eine Werkstückdicke einzustellen ist. Die Stellschraube dient nicht nur zur Betätigung des Stößels, sondern auch als Anschlag zur Begrenzung einer Bewegung in Verbindung mit einem Gegenanschlag. Der Bewegungsablauf beim Einspannen soll so sein, dass der Stößel erst den vollen Druck bzw. Enddruck der Druckquelle freischaltet und die Stellschraube auf der Gegenanschlagsfläche einen Weg, der unter diesem hohen Druck zurückgelegt wird, begrenzt. Der hohe Druck kann z. B. durch eine Gewichtskraft in der Größenordnung von 250 kp hervorgerufen werden. Eine Gefährdung, z. B. als Verletzungsgefahr für einen Finger, sei laut DE 1 552 653 C aufgrund der kleinen, begrenzten Strecke reduziert.

In der US 2 805 447 A (Patentinhaber: Voges; Anmeldetag: 05.11.1953) ist eine hydraulische Anordnung für eine Spritzgussmaschine beschrieben. Eine Ausfahrbewegung soll bei einem niedrigen Druck ausgeführt werden. Zum Ende des Ausfahrens hin soll ein hoher Druck angewendet werden, wobei (schlichtweg unbestimmte technische) Mittel vorgesehen sein sollen, durch die das Ausfahren vor der Beaufschlagung mit dem hohen Druck abgebrochen werden können soll. Zur Aufbringung eines (angeblich) niedrigen Drucks von ca. 300 PSI (ca. 20,6 bar) und eines hohen Drucks von ca. 1700 PSI (ca. 117 bar) ist eine Doppelkolbenanordnung vorgesehen, wobei der niedrige Druck über einen Druckstangenkolben ("ram") den größten Weg des Ausfahrens erbringt. Mit dem niedrigen Druck wird der Kolben bis zur Hochdruckposition bewegt. An dieser Stelle ist vorgesehen, dass ein Schaltarm einen Schalter betätigt, wodurch ein Ventil in einer Bypassleitung geschlossen wird, sodass der gesamte Druck der Pumpe auf den Kolben anliegt. Als Sicherheitsmaßnahme soll das Ausfahren unterbrochen werden können, wenn zufällig eine Hand oder ein Arm zwischen die Formteile gebracht wurde.

Verschiedene Offenlegungsschriften des Anmelders Mayer, Max aus Burlafingen um ein Hauptpatent mit dem Amtsaktenzeichen DE 22 29 538.1 herum betreffen Ausführungsformen von pneumatischen Spannvorrichtungen, bei denen mit jeweils einem Zylinder eine kleine Schubkraft und eine verstärkte Spannkraft am Ende eines Vorlaufs ausgeübt werden soll, wenn ein harter Gegenstand, z. B. aus Metall, erfasst wird. In dem beispielhaft benannten Dokument DE 22 29 538.1 ist ein Fühlstift vorgesehen, der eine Entlüftung einer Rückseite eines Hauptkolbens und damit gleichzeitig das Anlegen des pneumatischen Spanndrucks schaltet, sodass ein ständig auf dem Hauptkolben anliegender Druck wirksam werden kann. In einem Ausführungsbeispiel ist davon abweichend erläutert, dass die Schubkraft für eine Schließbewegung damit erzielt werden soll, dass auf die Rückseite eines Kolbens eingeströmtes Druckmittel auf die Vorderseite durchgeleitet wird, wobei ein Widerstand einer Druckfeder zu überwinden ist. Der Fühler, in einem Zustand nach Auflaufen auf ein hartes Material, bewirkt die Sperrung des Luftwegs zwischen den Hauptzylinderkammern und eine Entlüftung der vorderen Zylinderkammer.

Die DE 101 61 703 B4 (Patentinhaberin: FESTO AG & Co. KG; Anmeldetag: 15.12.2001) behandelt eine Entlüftungseinrichtung zur gesteuerten Entlüftung eines Pneumatikantriebs. Allgemein formuliert, kann dabei die Bewegung eines Antriebskolbens mit zwei Arbeitskammern für die Betätigung beliebiger Bauteile oder Einrichtungen abgegriffen werden. Zwischen den beiden Arbeitskammern ist ein Wechselventil eingeschaltet, das den Luftabfluss aus den beiden Arbeitskammern steuert. Dabei soll das Wechselventil nur denjenigen Eingang schließen, dessen zugeordnete Arbeitskammer dem momentan schnellsten Druckabfall ausgesetzt ist. Durch die gleichmäßige Entlüftung beider Arbeitskammern sollen die darin herrschenden Drücke stets in etwa gleich hohe Druckkräfte auf den Antriebskolben ausüben, sodass dieser im Stillstand bleibt. Damit sollen z. B. bei einer Not-Aus-Funktion ein unerwünschtes Weiterbewegen eines Pneumatikantriebs unterbunden werden, um Schäden an Mensch oder Maschine zu verhindern.

Bemerkenswert ist, dass viele der vorgestellten Schaltungen und Vorrichtungen für Werkzeugmaschinen entworfen sind. Die besonderen, zumindest zum Teil Normen entspringenden Bedingungen für Maschinen der Materialprüfungen können durch die angesprochenen Schaltungen und Komponenten häufig nicht erfüllt werden.

Einige der zuvor zitierten Druckschriften verdeutlichen das Prinzip des Operierens mit zwei unterschiedlichen Drücken und schlagen dafür geeignete Bauteile und Baugruppen vor.

## Aufgabenstellung

Idealerweise sollte eine Schaltung auf der einen Seite ein möglichst hohes Maß an Sicherheit bieten, auf der anderen Seite für eine Serienprüfung, insbesondere als Teil einer Materialprüfmaschine, geeignet sein. D. h., solche Aspekte wie Reduktion von Messfehlern, von Ausrichtzeiten und von Reproduktionsabweichungen und -variationen sollten durch einen entsprechenden Halter, dessen Materialprüfmaschine und durch seinen Betrieb bedient bzw. berücksichtigt werden. Jedoch ist als allgemeine Weisheit weithin geläufig, dass eine zu hohe Geschwindigkeit, natürlich auch bei einer Materialprüfung, ein beachtliches Risiko erzeugen kann (vgl. das Sprichwort "speed kills"). Es stellt sich die Frage, mit welchem Antrieb eine Materialprüfmaschine, genauer deren Halter, auszustatten ist, bei dem die Materialprüfmaschine nur mit einer möglichst geringen Wahrscheinlichkeit eine Unfallgefahr durch Quetschen von Körperteilen vor der eigentlichen Materialprüfung darstellt.

**Erfindungsbeschreibung**

Die erfindungsgemäße Aufgabe wird durch einen Halter bzw. seine Ansteuereinheit nach Anspruch 1 gelöst, eine entsprechende Materialprüfmaschine wird in Anspruch 14 vorgestellt und ein geeignetes Betriebsverfahren lässt sich Anspruch 15 entnehmen. Vorteilhafte Weiterbildungen lassen sich den abhängigen Ansprüchen entnehmen.

Ein Halter, der auch als Probenhalter hinlänglich bezeichnet werden kann, in einer Materialprüfmaschine ist dazu bestimmt, eine einzuspannende Materialprobe zu halten, insbesondere entgegen einer Versuchskraft zuverlässig an einem Ort vorzuhalten. Während der Durchführung eines Versuchs soll sich die Materialprobe nicht aus dem Halter herauslösen können. Häufig dienen Halter darüber hinaus sogar zum Einleiten der Prüfkraft auf die Materialprobe. Die Kräfte sind so beachtlich bzw. hoch, dass der Halter seine Halte- und Spannkraft für die Probe vorteilhafterweise pneumatisch, hydraulisch oder elektrisch, z. B. mithilfe von Linearmotoren, erhält. Daher gehört bei solchen Haltern auch eine Ansteuereinheit zu der Materialprüfmaschine, mit der z. B. Backen, die Haltebacken, verschoben und/oder verlagert werden können. Kombinationen der unterschiedlichen Bewegungsarten und -mittel sind ebenfalls möglich, z. B. elektropneumatisch oder z. B. elektrohydraulisch. Der Halter ist also in einer Materialprüfmaschine für Materialproben verbaubar. Die Betätigung eines beweglichen Teils wie einer Spannbacke in dem Halter ist durch einen Aktor möglich. Ein Fluid, wie eine Druckluft oder ein Hydraulikmedium, z. B. ein Hydraulikmedium Hydrauliköl, erhält seinen Druck aus einer Druckquelle. Die Materialprüfmaschine bzw. der Halter umfassen einen Anschluss für eine oder sogar die Druckquelle selbst. In dem Halter ist also mindestens ein erster Aktor vorhanden, der mit einem Fluid aus einer Druckquelle beaufschlagbar ist.

Je nach Materialprobe, z. B. je nach Länge und/oder Größe der Angriffs- und Haltebereiche, ist es notwendig, entweder einen Spanner mit einer oder mehreren kleinen Haltebacke(n), einen Spanner mit einer oder mehreren mittleren Haltebacke(n) oder einen Spanner mit wenigstens einer großen Haltebacke zu verwenden. Kleine Spannflächen liegen in einem Bereich von ca. 30 mm X 30 mm. Große Spannbacken haben Halteflächen von mehr als 100 mm X 100 mm. Idealerweise wird die Haltefläche, insbesondere unter Beaufschlagung mit einer höheren Kraft (im Vergleich mit der Kraft während der reinen Haltephase), zu einer Spannfläche.

Die Ansteuereinheit kann in einer Ausgestaltung als pneumatische oder als hydraulische Schaltung mit entsprechenden Ventilen realisiert sein. Zwischen der Druckquelle und dem Aktor ist als ein mögliches Ventil ein bi-stabiles Fluidfreischaltventil vorgesehen. Ein Fluidfreischaltventil sollte mindestens einen ersten und einen zweiten Zustand aufweisen. Weitere Zustände können in dem Fluidfreischaltventil vorgesehen sein. In der einfachsten Ausführung der nachfolgend weitergehend beschriebenen Schaltung bedarf es eines Bauteils wie eines bi-stabilen Fluidfreischaltventils, das zumindest zwei Zustände anbietet. In komplexeren Ausführungsformen lässt sich an Stelle des Zweistellungsfluidfreischaltventils auch ein Mehrstellungsfluidfreischaltventil verbauen. Ähnlich arbeitet ein Zählglied, über das verschiedene Zustände eingestellt werden können.

Der Aktor umfasst mindestens einen Spannkolben. In einem Zusammenspiel zwischen Fluidfreischaltventil und Aktor lässt sich dem Spannkolben eine bestimmte Position geben.

Neben dem ersten Aktor, der für die reguläre Spannkraft der Spannfläche zuständig ist, ist ein zweiter Aktor vorgesehen. Der zweite Aktor kann aufgrund seiner Bewegungskraft auf den Spannkolben auch als Bewegungseinheit bezeichnet werden. Mit anderen Worten, eine Stellkraft wird aus einem zweiten Aktor aufgebracht. Für die Einleitung der Stellkraft ist der zweite Aktor an dem Spannkolben angeschlossen, z. B. direkt und unmittelbar, alternativ auch mittelbar. Die von dem zweiten Aktor bereitgestellte Stellkraft liegt z. B. über eine mechanische Verbindung oder über ein fluides Kraftübertragungsmittel an dem Spannkolben an. Der zweite Aktor ermöglicht es, durch die Stellkraft mindestens eine Haftreibung des Spannkolbens zu überwinden. Die Stellkraft ist vorteilhafterweise zumindest größer als eine Reibkraft des Spannkolbens. Der Spannkolben des Halters ist durch die Stellkraft, insbesondere unidirektional, auf einem Stellweg bewegbar. Durch die Stellkraft nimmt der Aktor, bei sonst keinen weiteren vorhandenen Drücken, eine Schließstellung ein (wobei der natürlicherweise vorhandene Luftdruck - aus Vereinfachungsgründen - erst einmal vernachlässigt werden darf). Bei Einnahme einer Schließstellung ist diese anhand des zur Verfügung stehenden Stellwegs bestimmbar. Der Stellweg des Spannkolbens kann durch ein gegenständliches Hindernis, wie durch einen Anschlag, insbesondere an einer Materialprobe, abgeschlossen sein.

Der weitere Aktor, also insbesondere der zweite Aktor bzw. der zusätzlich angreifende Aktor, übt eine Stellkraft aus, die - insbesondere aus Gründen der Effizienz - überwiegend in eine Richtung gerichtet sein sollte. Mittels der Stellkraft kann ein Schließdruck auf den Kolben ausgeübt werden. Die Spannkraft bzw. der Druck, aus dem sich die Spannkraft der Spannbacke ableitet, ist ebenfalls gerichtet. Idealerweise wirken die Spannkraft und die Stellkraft in die gleiche Richtung. Spannkraft und Stellkraft sollten aber unterschiedlich groß sein, damit sie unterschiedliche Aufgaben übernehmen können. Die Spannkraft und die Stellkraft wirken über den Kolben auf eine einzulegende bzw. eingelegte Probe, wenn die Schließstellung erreicht ist. In einer günstigen Ausgestaltung sind Spannkraft und Stellkraft an dem Kolben gleichgerichtet. Idealerweise überlagern sich Spannkraft und Stellkraft. Mit anderen Worten, der zweite Aktor wirkt in die gleiche Richtung wie das Druck erzeugende Medium auf den Kolben wirkt (Mittel für den Spanndruck bzw. für die Spannkraft).

Das bistabile Fluidfreischaltventil befindet sich zeitweilig in einem ersten oder in einem zweiten Zustand. In der Schaltung ist wenigstens eine erste Ventilsteuerleitung vorhanden. Das Fluidfreischaltventil ist mit der ersten Ventilsteuerleitung verbunden. Ein Fluiddruck in der ersten Ventilsteuerleitung beeinflusst den Zustand des Fluidfreischaltventils. Eine zweite Ventilsteuerleitung, die ebenfalls mit dem Fluidfreischaltventil verbunden ist, führt dem Fluidfreischaltventil einen zweiten Steuerdruck zu. Der zweite Steuerdruck kann ebenfalls den Zustand des Fluidfreischaltventils beeinflussen. Die erste Ventilsteuerleitung ist mit einer Kammer des Aktors verbunden. Der Kammerdruck des Aktors liegt über die erste Ventilsteuerleitung an dem Fluidfreischaltventil an. Durch die Versorgung des Fluidfreischaltventils mit Druck aus dem Aktor ist ein Vergleich des Drucks mit einem voreingestellten Schwellendruck an dem Fluidfreischaltventil möglich. Der Wert des Schwellendrucks ist ein Druckwert, durch den sich entscheidet, ob ein Zustandswechsel aus dem ersten Zustand in den zweiten Zustand durchgeführt wird. Liegt der Druck in der ersten Ventilsteuerleitung unter dem Schwellendruck, kann das instabile Fluidfreischaltventil in den zweiten Zustand wechseln. Als Schwellendruck kann z. B. ein Druck in einem Druckbereich von 0,8 bis 1,1 bar, wie 1 bar (bei einem pneumatisch arbeitenden Ventil), zum Vergleich mit einem zugeführten Stelldruck in dem Fluidfreischaltventil vorgesehen sein. Auch ein höherer, eingestellter Schwellendruck kann vorteilhaft sein, z. B. in Abhängigkeit des Arbeitsdruckbereichs einer Materialprüfmaschine. In einer Ausführungsform kann der Schwellendruck z. B. 1 bar über dem minimalen Arbeitsdruck des Arbeitsdruckbereichs als Referenz festgelegt sein kann. Ein höherer Schwellendruck als 1 bar kann z. B. bei einer hydraulisch arbeitenden Ansteuereinheit, also in einem hydraulischen Fluidfreischaltventil nützlich sein.

Ein Zustandswechsel des Fluidfreischaltventils ist aber idealerweise zusätzlich noch von einem Umschaltsignal abhängig. Das Umschaltsignal sollte an dem Fluidfreischaltventil anliegen. Über die zweite Ventilsteuerleitung ist das Umschaltsignal dem Fluidfreischaltventil zuführbar. Anders gesagt, ist der zweite Zustand nur dann einnehmbar, wenn sowohl über die erste Ventilsteuerleitung als auch über die zweite Ventilsteuerleitung die Zulässigkeit des Umschaltens signalisiert bzw. eingeräumt wird. Das Unterschreiten des Schwellendrucks kann als ein erstes Umschaltsignal bezeichnet werden. Entsprechend kann ein Umschaltsignal in der zweiten Ventilsteuerleitung als zweites Umschaltsignal bezeichnet werden.

Es sei hervorgehoben, dass bisher noch nichts über die zeitliche Abfolge der Umschaltsignale ausgesagt worden ist.

Das zweite Umschaltsignal kann, in einer Ausgestaltung, zu einem Zeitpunkt vor dem ersten Umschaltsignal vorliegen. Der Wechsel in den zweiten Zustand tritt jedoch erst dann ein, wenn der Druck aus der Kammer des Aktors den Druck in der ersten Ventilsteuerleitung unter den Schwellendruck absinken lässt. Durch den Vergleich des Drucks mit dem Schwellendruck erfolgt automatisch eine Sicherheitsüberprüfung, die ein zufälliges Wechseln in den zweiten Zustand, möglicherweise in einer gefahrträchtigen Situation, unterbindet. Das Erfordernis eines Umschaltsignals, insbesondere eines zweiten Umschaltsignals, in der zweiten Ventilsteuerleitung ermöglicht es, die Einnahme des zweiten Zustands an eine, insbesondere die Sicherheit noch weitergehend erhöhende, Schaltvoraussetzung zwingend zu binden. Diese Schaltvoraussetzung ist vorzugsweise von einer betätigenden Person zu erzeugen. Auf diese Weise lässt sich der Übergang in den zweiten Zustand des Fluidfreischaltventils, mit dem eine Erhöhung des Gefahrenpotentials verbunden sein kann, mindestens zweifach absichern. Es ist sogar möglich, das Zurverfügungstellen des Umschaltsignals an die Erfüllung einer Mehrzahl von Sicherheitsanforderungen als erste zu erfüllende Bedingung zu knüpfen, z. B. die Betätigung von Tastern, z. B. das Einhalten von Lichtschranken.

Genauso ist es möglich und vorstellbar, dass das zweite Umschaltsignal erst anliegt, wenn das erste Umschaltsignal zuvor erzeugt wurde; d. h., umgekehrt zu dem oben stehenden Ablauf.

Es kann auch gesagt werden, dass das Fluidfreischaltventil nur dann in den zweiten Zustand wechselt, wenn in einer ersten Ventilsteuerleitung, die von einer Kammer des Aktors mit Druck versorgbar ist, d. h., unter regulären Umständen versorgt wird, ein Schwellendruck unterschritten ist und zusätzlich in der zweiten Ventilsteuerleitung ein Umschaltsignal an dem Fluidfreischaltventil anliegt. Liegt der Druck in der ersten Ventilsteuerleitung über dem Schwellendruck, so ist der zweite Zustand nicht einnehmbar.

Das Sicherheitskonzept des Halters umfasst somit einen intrinsischen Teil und einen extrinsisch beeinflussbaren Teil der Ansteuerreinheit, sodass eine fehlerhafte Bedienung weitgehend ausgeschlossen werden kann. Bei dieser Betrachtungsweise kann das zweite Umschaltsignal als extrinsische Bedingung angesehen werden. Die erste Bedingung, also der intrinsische Teil, hängt - in einer Ausgestaltung - von Druckverhältnissen in der Schaltung, insbesondere an einer oder mehreren Stellen in der Schaltung, ab.

Die Materialprüfmaschine, insbesondere zum Testen von metallischen Proben, umfasst einen Halter für Materialproben. Diesem ist ein druckbeaufschlagtes Fluid zuführbar. Das Fluid kann dem Halter für einen Spannzustand eine Spannkraft vermitteln. Der Halter kann z. B. einen ersten und einen zweiten Spanner umfassen, mit dem Materialprobenendbereiche einspannbar sind. Materialprüfmaschinen setzen Materialproben mindestens einer kontrollierten, in manchen Anwendungsfällen auch einer wiederholten Belastung aus, wie z. B. einer Spannkraft. Beispiele für Materialprüfmaschinen, die einen besonders sicheren Halt für eine Materialprobe, insbesondere aufgrund von Probenbelastungen bis zur Zerstörung bzw. Bruch, benötigen, sind Zug- und/oder Druckprüfmaschinen. Bei Materialprüfmaschinen, die derart verwendet werden, dass häufige Probenwechsel vorzunehmen sind, also die Probenwechsel als Routinearbeiten anzusehen sind, steigt die Gefahr von Unaufmerksamkeiten beim Probenwechsel.

In der Regel ist der Halter für einen kraftschlüssigen Betrieb bestimmt. Die Spannbacken sollen die Probe kraftschlüssig halten. Die Klemmung bzw. das Halten der Probe erfolgt mithilfe der Spannbacken in einer kraftschlüssigen Weise. Befindet sich ein Finger zwischen den Spannbacken, ist dieser häufig - aufgrund der Spanndrücke - nicht mehr zwischen den Spannbacken herausziehbar.

Eine Gefahr bzw. Gefährdung, hervorgerufen durch Kategorien von Bedienungsfehlern, wird durch eine entsprechende Ausstattung der Materialprüfmaschine zumindest erheblich vermindert, wenn nicht sogar gänzlich ausgeschlossen. Der Halter weist eine Stellung auf, die als eine Offenstellung bezeichnet werden kann. In der Offenstellung ist z. B. die Materialprobe aus dem Halter entnehmbar. Der Halter weist eine Stellung auf, die als Schließstellung bezeichnet werden kann. Befindet sich der Halter in der Schließstellung, ist ein Spannzustand einnehmbar. Die Schließstellung des Halters kann von einer Spannstellung des Halters abweichen. Schließstellung und endgültige Spannstellung können, müssen aber nicht ortsgleich sein. Die Offenstellung und die Schließstellung des Halters können auch als spannkraftfreie Zustände des Halters bezeichnet werden. Eine Bewegung des Halters, insbesondere des Spanners, in Bezug auf eine Materialprobe ist durch eine Bewegungseinheit ausführbar. Die Bewegungseinheit ist mit dem Halter verbunden. Vorzugsweise befindet sich die Bewegungseinheit in einem permanent aktiven Betriebszustand, d. h. die Bewegungseinheit wird auf Dauer betrieben, also auch dann, wenn keine Bewegung erfolgt. Die Bewegungseinheit dient der Einnahme einer Vorzugsstellung des Halters. Die Schließstellung kann eine solche Vorzugsstellung sein. In einer solchen Präferenzstellung liegt an der Materialprobe zumindest eine erste Haltekraft an. In einem Ausführungsbeispiel sind bei einem Halter mit zwei Spannern oder bei Verwendung von zwei Haltern die erste Haltekraft durch einen zweiten Aktor und eine zweite Haltekraft durch einen vierten Aktor bereitstellbar. Anders gesagt, kann ein Aktor die Bewegung einer Bewegungseinheit erzeugen. Es ist möglich, einen Bewegungsantrieb über einen Sicherheitskraftvektor bereitzustellen. Der Sicherheitskraftvektor stellt die Kraft für einen Antrieb einer Spannbacke zur Verfügung. Unter einem Sicherheitskraftvektor wird eine gerichtete Kraft verstanden, deren Betrag vorzugsweise 150 Newton (N) nicht übersteigt. Ein Sicherheitskraftvektor oder ein Schließdruck bzw. ein erster Spanndruck können z. B. mittels einer festgelegten Federkonstante oder einem Überdruckventil begrenzt werden. Auch ein Schließdruck von 2 $N/mm^2$ kann als sicher bezeichnet werden, wenn im Hinblick auf eine Verletzungsgefahr körperliche Schäden vermieden werden sollen. Aufgrund der Festlegung einer Begrenzung ist die Sicherheit sowohl über einen Sicherheitskraftvektor als auch über einen Schließdruck gegeben, also auch bei Einsatz einer ersten und einer zweiten, z. B. zur ersten kleineren, Spannbackengröße. Eine Präferenzrichtung weist von der Offenstellung auf die Schließstellung hin. Es ist auch möglich, einen Sicherheitskraftvektor, z. B. von einer Feder, mit einem Schließdruck, z. B. aus einer Sicherheits-Fluiddruckzylindereinheit, zusammenwirken zu lassen. Ein (festgelegter) Grenzwert eines Spanndrucks bzw. Schließdrucks ist vorzugsweise nur in der Schließstellung mittels Ansteuereinheit überschreitbar.

Ein Verfahren zur Ansteuerung, das besonderen Schutz bei der Handhabung bietet, lässt sich z. B. an Haltern für Materialproben oder Werkzeugen (der Materialprüfung) einsetzen. Besonders vorteilhaft ist das Verfahren mit einer zuvor dargelegten Ansteuereinheit realisierbar. Das Verfahren nutzt bzw. baut darauf auf, dass mindestens ein Aktor und mindestens ein bi-stabiles Fluidfreischaltventil, verkürzt auch nur als Ventil bezeichnet, vorhanden sind. Mindestens eine, vorzugsweise zwei, verbindende Druckmittelleitungen liegen zwischen Aktor und Ventil. Eine Druckmittelleitung führt auch mindestens von dem Fluidfreischaltventil bis zu einer Druckquelle eines Fluids. Das Fluidfreischaltventil kann zumindest in einem Schaltzustand einen Anschluss an die Druckquelle bereitstellen. Der Aktor kann mindestens eine Stellung einnehmen, die nicht mehr die Ausgangsstellung ist. Eine der Aktorstellungen, z. B. die erste Stellung, ist eine Schließstellung. Eine zweite Stellung kann als Aufhaltestellung oder Offenstellung vorliegen. Anstatt einer zweiten Stellung kann aber auch ein Bewegungsspielraum vorgesehen sein. Außerhalb der Schließstellung des Aktors öffnet sich ein Aufnahmebereich, insbesondere zum Einsetzen einer Materialprobe oder eines Werkzeugs in einen Halter.

Der Aktor wird durch einen Aufhaltedruck offen gehalten. Der Aufhaltedruck kann ein Druck in dem Aktor selbst sein. Über den Aktor wird eine Sicherheitsschließkraft appliziert, die dem Aufhaltedruck entgegensteht. Die Sicherheitsschließkraft kann im Inneren des Aktors bereitgestellt werden. In einer weiteren Ausgestaltung kann die Sicherheitsschließkraft oder ein Teil der Sicherheitsschließkraft von außerhalb des Aktors zugeführt werden. Die Aufhaltestellung wird verlassen, wenn der Aufhaltedruck zu gering ist, um die Sicherheitsschließkraft zu kompensieren. Der Aufhaltedruck wirkt auf das Fluidfreischaltventil und legt einen Schaltzustand des Ventils, insbesondere einen druckfreien Zustand, wie eine Druckquellensperre auf den Aktor, fest. Eine Änderung des Schaltzustands ermöglicht den Aufbau eines Spanndrucks in dem Aktor. Der Spanndruck wirkt in dem Aktor in einer Richtung, die einer Richtung des Aufhaltedrucks entgegen liegt. Der Aufbau des Spanndrucks erfolgt aus der Druckquelle durch das Fluidfreischaltventil hindurch in dem Aktor, wenn ein hinreichender Abbau des Aufhaltedrucks erfolgt ist. Insbesondere sollte der Aufhaltedruck so weit abgesunken sein, dass sich die Sicherheitsschließkraft auf die Bewegung des Aktors auswirkt. Der Aufhaltedruck folgt vorzugsweise einer Druck-Zeit-Kennlinie. Der Aufhaltedruck korreliert mit einer Bewegung des Aktors in die Schließstellung. Der Aufhaltedruck in der Schließstellung kann auch als Schließstellungsdruck des Aktors bezeichnet werden Der Schließstellungsdruck ist ein unterschreitbarer Schwellenwert eines Fluiddrucks, der aus dem Aktor über mindestens eine Druckleitung herausgeführt werden kann. Nach einem erfolgten Abbau des Aufhaltedrucks ist eine Zustandsänderung des Fluidfreischaltventils möglich. Anders gesagt, sichert der Aufhaltedruck das Fluidfreischaltsventil gegen eine Zustandsänderung in einen Durchleitungszustand für Druck aus der Druckquelle ab. Der Durchleitungszustand ist einnehmbar, wenn dieser angefordert worden ist oder in Folge, d. h. nach dem Abbau des Aufhaltedrucks, angefordert wird. Dazu ist eine Eingabeeinheit vorgesehen. Die Eingabeeinheit kann der Ansteuereinheit zugerechnet werden, in diesem Fall ist die Eingabeeinheit Teil der Ansteuereinheit. Die Eingabeeinheit gibt die Anforderung einer Zustandsänderung an das Fluidfreischaltventil. Anders gesagt, schaltet das Fluidfreischaltventil in einen Durchleitungszustand, wenn mindestens zwei, vorzugsweise drei, Schaltbedingungen erfüllt sind. Damit ist der Aufbau eines Spanndrucks mindestens doppelt gegen ein unzeitiges Eintreten abgesichert.

Durch eine strikte Kraftbegrenzung in Bewegungsphasen des Halters, insbesondere während des Ablaufs von Bearbeitungsschritten vor dem eigentlichen Spannen, und durch die Koppelung der Freischaltung der Spannkraft des Halters an das Vorliegen intrinsischer Druckdifferenzen, insbesondere unterhalb eines Schwellenwerts, werden, insbesondere bei Arbeiten mit Materialprüfmaschinen, Unfallgefahren, die sich durch mögliche Fehlbedienungen ergeben können, erheblich reduziert.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Je nach Typ der Materialprüfmaschine bzw. des in ihr eingebauten Halters sind eine oder mehrere Spannbacken vorhanden. Eine solche Spannbacke sollte mehrere, zumindest zwei Endstellungen einnehmen können. Eine der Stellungen sollte eine Schließstellung sein. Folglich ist ein Halter so zu konfigurieren, dass mindestens eine Spannbacke des Halters eine Schließstellung einnehmen kann. Die Einnahme der Schließstellung wird idealerweise nicht von dem ersten Aktor, der für die Spannkraft zuständig ist, sondern durch einen zweiten Aktor der Spannbacke hervorgerufen. Vorteilhaft ist es, wenn dieser zweite Aktor, wobei pro Hauptaktor jeweils ein eigener zweiter Aktor vorhanden ist, eine Stellkraftbegrenzungseinheit aufweist. Mit anderen Worten, die Kraft, mit der die Schließstellung angefahren wird bzw. unter der die Schließstellung eingenommen wurde, sollte auf einen akzeptablen Wert begrenzt sein. Mithilfe der Stellkraftbegrenzungseinheit kann eine Stellkraft bereitgestellt werden. Ist die Stellkraft länger anhaltend vorhanden, wird also - während einer bestimmten Phase - eine Stellkraft kontinuierlich bereitgestellt, führt die Stellkraft zur Einnahme einer Schließstellung der Spannbacke. Anschläge oder sonstige Hindernisse, die die Einnahme der Schließstellung verhindern können, bleiben dabei außer Betracht. Die Schließkraft ist aber nach oben hin begrenzt. Die Schließkraft verbleibt in einem niedrigen Bereich. Ein niedriger Bereich einer Kraft befindet sich unterhalb einer Kraft, die einer Gewichtskraft von 10 kg bis 15 kg entspricht. Zusätzlich oder in einer alternativen Ausgestaltung der Begrenzung kann ein permanentes Unterschreiten eines maximalen Drucks, ausgeübt durch die Spannbacke, geregelt werden.

Vorteilhafterweise lässt sich der Aktor als Linearzylinder realisieren. Ein Linearzylinder als Aktor bietet eine verlässliche Umsetzung von Druck auf Weg und umgekehrt. Für die Bewegung des Aktors kann dieser mit Druck aus einer Quelle bezogen werden, es kann auch gesagt werden, mit einem Quellendruck beaufschlagt werden. Geeignete Mittel zur Darbietung eines Quelldrucks sind Pumpen, Druckreservoirs oder Anschlüsse an Hochdruckleitungen.

Der Aktor kann unterschiedliche Stellungen bzw. Positionen einnehmen. Eine Stellung lässt sich als Druckaufbaustellung bezeichnen. Der Aktor hat vorteilhafterweise auch wenigstens zwei Kammern, von denen eine Kammer eine Aufhaltekammer ist. Druck in der Aufhaltekammer sorgt für eine Position einer Spannbacke, in der die vor der Spannbacke anzuordnende Probe nicht gehalten ist, insbesondere in dem Fall, dass die Kraft aus dem Druck in der Aufhaltekammer die Kraft aus einem entgegenstehenden Druck, z. B. ausgeübt in einer Schließkammer, übersteigt. Mithilfe des Fluidfreischaltventils können die Positionen und Stellungen des Aktors bzw. innerhalb des Aktors, also z. B. des Kolbens im Aktor, beeinflusst werden. Einer Druckaufbaustellung des Fluidfreischaltventils steht ein Fluidabstromdruck einer Aufhaltekammer des Aktors, insbesondere des Linearzylinders, entgegen. Dieser liegt ansteuerseitig durch die erste Ventilsteuerleitung am Fluidfreischaltventil an. Das Abströmen von Fluid wird, nach einem anderen Aspekt, durch einen Druck befördert. Das Fluidfreischaltventil hat eine oder mehrere Steuerseiten. Andere Anschlüsse sind Arbeits- oder Druckanschlüsse. Mit einem zustandsbestimmenden Ventil wie dem Fluidfreischaltventil lässt sich die Stellung des Aktors, z. B. zur Einnahme der Schließstellung, festlegen.

In einer Materialprüfmaschine, insbesondere in solchen, bei denen eine Probe an zwei Seiten einzuspannen ist, sind vorzugsweise zwei Halter vorhanden. Jeder Halter sollte wenigstens einen (Haupt-)Aktor haben. In diesem Fall sind mindestens zwei Aktoren vorgesehen, die für das Spannen der Probe bestimmt sind. In einer für manuelle Probenwechsel ausgestalteten Materialprüfmaschine sind die für das Spannen bestimmten Aktoren vorzugsweise unabhängig voneinander, anders gesagt, jeweils mit einer Eingabeeinheit betätigbar. In einer Materialprüfmaschine bzw. in zwei in einer Materialprüfmaschine vorhandenen Haltern können ein erster Aktor und ein dritter Aktor sequentiell über eine Eingabeeinheit ansteuerbar sein. Es ist auch möglich, z. B. in einer Ansteuereinheit, einen ersten Aktor über ein erstes und einen dritten Aktor über ein zweites, insbesondere jeweils bi-stabiles, Fluidfreischaltventil mit jeweils einer zugeordneten Eingabeeinheit anzusteuern. Die Betätigung der für ein zweiseitiges Spannen einer Probe bestimmten Aktoren kann mit einem günstigen Zeitabstand, z. B. mindestens 2 Sekunden, zeiteffizient und sicher erfolgen. In einer solchen Ausgestaltung wird der erste Aktor zuerst gespannt, anschließend wird, also so zu sagen sequentiell, der dritte Aktor gespannt. In einer solchen Konfiguration kann einem durch einen Aktor hervorgerufenen Spannvorgang eine ungeteilte Aufmerksamkeit durch einen Bediener zuteilwerden. In einer alternativen Ausgestaltung können die Aktoren bei einer Materialprüfmaschine, die z. B. mit einer automatischen Probenzuführung zusammenarbeitet, oder auch bei einer Materialprüfmaschine, die eine automatische Probenpositioniereinrichtung umfasst, synchronisiert arbeiten.

Insbesondere können die Aktoren eines Aktorenpaares zueinander bewegungskoordiniert sein. Der Begriff "synchronisiert" kann in einer besonders günstigen Ausgestaltung in dem Sinne verstanden werden, dass sich die Bewegung des einen Aktors in (zumindest) proportionalem Verhältnis auch als Bewegung des anderen Aktors, insbesondere während der gleichen Phase, finden lässt. In einer weiteren Ausgestaltung kann eine Bewegung auch als synchronisierte Bewegung dadurch gegeben sein, dass ein festlegbares Zeitintervall, z. B. ein Millisekundenintervall, zwischen dem Beginn oder dem Ende einer ersten Bewegung des einen Aktors und dem Beginn einer zweiten Bewegung des anderen Aktors, voreingestellt ist. Durch einen solchen synchronisierten Bewegungsablauf wird z. B. eine Relaxation der Materialprobe nach einem ersten Spannen erlaubt. Die Bewegung des einen Aktors entspricht der gleichgerichteten Bewegung des zweiten Aktors. Dabei ist mindestens ein Wechselventil den Aktoren an der Seite des Fluidabstromes nachgeordnet. Dieses Wechselventil ist vorzugsweise ein Zweistellungsrückschlagventil, welches durch Druckunterschiede schaltbar ist. Am Fluidfreischaltventil liegt ein Stelldruck an. Dieser wird durch den höchsten Fluidabstromdruck der Aktoren durch das Wechselventil zur Verfügung gestellt. Sind zwei insbesondere synchronisiert arbeitende Halter vorhanden, so können die Aktoren des einen Halters als erster und zweiter Aktor bezeichnet werden und die Aktoren des anderen Halters als dritter und vierter Aktor bezeichnet werden.

Durch das Vorhandensein eines Zweistellungsrückschlagventils in der Schaltung schafft das Ventil eine Schaltung, bei der das Gefahrenpotential, das von jedem Halter der mindestens zwei vorhandenen Halter hervorgerufen werden kann, immer wieder auf denjenigen Halter konzentriert wird, in dessen Aufhaltekammer der jeweils höhere Druck zu einem bestimmten Zeitpunkt vorliegt. Das Vorhandensein eines Druckes in einer Aufhaltekammer zeigt an, dass eine Beendigung eines Aufhaltezustands zumindest bei einem Halter noch nicht abgeschlossen ist. Daher kann in dem Bereich des einen Halters bzw. an dem einen Halter, insbesondere im Bereich des oder vor dem Halter mit dem höheren Druck in der Aufhaltekammer im Vergleich mit dem Druck in dem anderen Halter, noch ein Zwischenraum existieren, in dem sich möglicherweise ein Finger befindet. Die Zuführung der Spannkraft auf beide Halter erfolgt gleichzeitig. Erst wenn der Aufhaltezustand beendet bzw. verlassen ist, anders gesagt, wenn die Offenstellung beider Halter geschlossen ist, sowohl des ersten als auch des zweiten Halters, ist eine Krafterhöhung, die jenseits der Kraft aus der Sicherheitskraftbegrenzung liegt, möglich.

Auch sind besondere Überlegungen in die Gestaltung von Druckverhältnissen eingegangen. Der vorzugsweise in einem Linearzylinder geführte Spannkolben weist eine Aufhaltefläche und eine Antriebsfläche auf. Die Aufhaltefläche und die Antriebsfläche sind durch einen Dichtbereich voneinander getrennt. Vorteilhafterweise wird der Spannkolben als Dichtbereich genutzt, sodass insbesondere der Spannkolben eine Fluidbegrenzung darstellt. Die Aufhaltefläche ist mit einem (ersten) Fluiddruck beaufschlagbar. Die Antriebsfläche ist mit einem (zweiten) Fluiddruck beaufschlagbar. In einer Aufhaltestellung ist der auf die Aufhaltefläche wirkende Fluiddruck größer als der auf die Antriebsfläche wirkende Fluiddruck. Das Beibehalten der Aufhaltestellung lässt sich dadurch fördern, dass dem Spannkolben eine Fluiddruckentlastung der Antriebsfläche ermöglicht wird. Durch eine Fluidableitung kann Fluid, das sich vor der Antriebsfläche befindet, aus dem Aktor entweichen. Das Fluid fließt vorzugsweise über das Fluidfreischaltventil ab. Durch den angelegten Fluiddruck an der Aufhaltefläche ist der Spannkolben in der Aufhaltestellung festgesetzt. Eine Bewegung des Spannkolbens ist erst nach Abstellung der Fluiddruckbeaufschlagung, insbesondere im Sinne einer Unterschreitung eines Mindestdrucks, auf der Aufhaltefläche möglich. Die fluiddruckbeaufschlagte Aufhaltefläche ist durch Abfluss von Fluid von der Aufhaltefläche weg über einen vorgegebenen Strömungswiderstand, insbesondere gebildet durch einen Leitungsquerschnitt und eine Leitungslänge, druckentlastbar. Eine Bewegung des Kolbens und damit der auf dem Kolben angeordneten Aufhaltefläche und der auf dem Kolben angeordneten Antriebsfläche, aus der Aufhaltestellung heraus erfolgt in einem druckbegrenzten Abströmmodus. Die Aufhaltestellung des Spannkolbens ist anhand einer Stellung des Kolbens festgelegt. Es ist möglich, die Schaltung dahingehend auszugestalten, dass das Anfahren der Aufhaltestellung unterhalb einer begrenzten, summarischen Sicherheitskraft, insbesondere in der Größe einer Schließkraft, vorgesehen wird.

In einem aus vielen Ständen der Technik bekannten Halter ginge von dem Spannkolben eine Verletzungsgefahr aus. In dem erfindungsgemäßen Halter ist die Verletzungsgefahr aufgrund verschiedener Maßnahmen verringert. Einige Maßnahmen sind zuvor angesprochen worden. Weitere Maßnahmen werden nachfolgend vorgestellt.

Als eine weitere Maßnahme kann vorgesehen sein, dass zumindest einseitig, insbesondere antriebsflächenseitig, dem Spannkolben eine Feder und/oder eine Fluiddruckzylindereinheit zugeordnet ist. Die Feder und/oder die Fluiddruckzylindereinheit wirken als Aktor, insbesondere als zweiter Aktor. Die Kraft, insbesondere die Schließkraft, die die Feder und/oder der Fluiddruckzylinder ausüben kann/können, ist begrenzt, es kann auch gesagt werden, limitiert.

Durch die Begrenzung bzw. Limitierung kann der Spannkolben mit einer Schließkraft von maximal 150 Newton und/oder mit einem Schließdruck von bis zu maximal $2 \frac{N}{mm^2}$ bewegbar sein. Es hat sich gezeigt, dass Kräfte unterhalb von 150 Newton, bei größeren Spannbacken, wie z. B. bei welchen mit 81 $cm^2$ großen Spannflächen, Drücke von weniger als $2 \frac{N}{mm^2}$ bis $3 \frac{N}{mm^2}$, also ca. $2{,}5 \frac{N}{mm^2}$, in der Regel nur unangenehme Drücke, aber keine Verletzungen hervorrufen können. In Abhängigkeit der tatsächlichen Spannfläche greift von den beiden Grenzwerten Kraft (150 Newton) und Druck ($2{,}5 \frac{N}{mm^2}$) der Grenzwert, der der niedrigere ist, wenn die Kraft in Druck bzw. umgekehrt umzurechnen ist. Der niedrigere Grenzwert der beiden zur Verfügung stehenden Grenzwerte bestimmt die Kraft und den Druck, der von der Spannfläche der Spannbacke ausgeübt wird.

Die Ablaufsteuerung, die sich aus der Schaltung ergibt, gibt bestimmte Arbeitsgänge vor. Ein Arbeitsgang bzw. Arbeitsschritt erfordert, dass zusätzlich eine Sicherheitseinrichtung betätigt wird, bevor der Spannvorgang eingeleitet werden kann. Beispielsweise müssen beide Hände eines Bedieners auf Tastern liegen, bevor ein Halter oder auch (erster-) Aktor, vorzugsweise beide Halter gleichermaßen, spannen kann/können.

Besonders vorteilhaft ist eine Ansteuereinheit, die eine Eingabeeinheit aufweist. Die Eingabeeinheit ermöglicht es, der Ansteuereinheit Steuerbefehle zuzuführen. Die Steuerbefehle können zum Beispiel durch eine manuelle Betätigung eines Fühlers, vorzugsweise eines zueinander in einem Mindestabstand vorliegenden Fühlerpaars, wie eines Temperaturfühlers, erzeugt werden. Als Eingabeeinheit eignet sich ein Tippsicherheitsschalter. Vorzugsweise werden zwei Tippsicherheitsschalter vorgesehen, die zweihändig betätigt werden müssen aufgrund eines Abstandes von mehr als 30 cm zwischen den Tippsicherheitsschaltern. Tippsicherheitsschalter können fluidisch oder elektronisch arbeiten. Eine weitere Ansteuereinheit kann ein Lichtschrankensystem sein. Das Steuersignal ist als Druckänderung oder als Spannungsänderung auf einer Leitung, wie auf einer Druckleitung oder auf einer Stromleitung, darstellbar, wenn insbesondere zwei Tippsicherheitsschalter gleichzeitig betätigt sind. In einem Betätigungszustand der Eingabeeinheit sind - in einer Ausgestaltung - alle Erfordernisse an der Eingabeeinheit erfüllt, die zur Generierung eines Steuersignals vorliegen müssen. Das Steuersignal kann dem Fluidfreischaltsignal zugefügt werden. Vorzugsweise liegt das Steuersignal sekundär, steuerseitig an dem Fluidfreischaltventil an. Das Steuersignal kann auch als Stellsignal bezeichnet werden. Ein Stellsignal ist eine Anforderung einer Zustandsänderung des Fluidfreischaltventils. Eine Stellungsänderung des Fluidfreischaltventils wird abgerufen. Die Stellungsänderung erfolgt allerdings erst dann, wenn ansteuerseitig, anders gesagt primärsteuerseitig am Fluidfreischaltventil ein Druck unterhalb eines Schwellendrucks anliegt. Auf diese Weise wird verhindert, dass durch eine zufällige, insbesondere einhändige, Betätigung der Eingabeeinheit das Fluidfreischaltventil in eine zweite Stellung gelangt, in der ein Spanndruck über einen Grenzwert erhöht wird. Der Term "sekundärsteuerseitig" besagt, dass eine Ansteuerbarkeit des Fluidfreischaltventils der primären, insbesondere intrinsischen, Steuerung des Fluidfreischaltventils nachrangig ist.

Die Ansteuereinheit kann mindestens ein, vorzugsweise zwei, ein erstes und ein zweites, Bewegungsventil umfassen. Das Bewegungsventil weist mindestens eine erste und eine zweite Durchflussstellung auf. Vorzugsweise wird das Bewegungsventil über eine Komponente der Ansteuereinheit betätigt, wie über eine Eingabeeinheit, insbesondere eine zweite Eingabeeinheit. Mindestens eines der Bewegungsventile kann elektronisch ansteuerbar sein und aufgrund eines Steuersignals die Durchflussstellung weichenartig ändern. Die erste Durchflussstellung des Bewegungsventils verbindet eine Druckquelle mit der ersten Steuerleitung. Vorzugsweise in einer der Stellungen gelangt das Fluid aus der Druckquelle in die Aufhaltekammer. Der Aktor, der auch als Aktuator bezeichnet werden kann, wird durch Druckzufuhr geöffnet. In der zweiten Durchflussstellung fließt Fluid aus der ersten Steuerleitung in ein Fluidreservoir ab. Das Fluidreservoir kann ein Sumpf- oder ein Vorratsbehälter sein. In der zweiten Durchflussstellung kann auch Fluid aus der Aufhaltekammer in Richtung des Fluidfreischaltventils, insbesondere über eine Steuerabzweigung einer Druckmittelleitungsverbindung in die erste Steuerleitung, gelangen. Der Fluidabfluss aus der Aufhaltekammer behindert zumindest den Fluidabfluss aus der ersten Steuerleitung. Einem Austritt von Fluid aus der ersten Steuerleitung in Richtung Fluidreservoir steht ein Staudruck entgegen. Das Fluid wird in die erste Steuerleitung zurückgestaut. Anders gesagt, kann auch Fluid aus der Aufhaltekammer beim Abfließen in die erste Steuerleitung eindringen und somit einen Gegendruck in der ersten Steuerleitung aufbauen. Vorzugsweise ist ein Abströmquerschnitt einer Leitung aus der Aufhaltekammer und der ersten Steuerleitung größer oder gleich einem Durchflussquerschnitt des Bewegungsventils in der zweiten Durchflussstellung. Es ist auch möglich, ein zusätzliches Drosselventil einzubauen, das unidirektional einen Rückfluss in das Fluidreservoir behindert. Durch das Drosselventil, wie eine größenverstellbare Abströmöffnung oder Bohrung, und/oder ein Verhältnis der beiden Abströmquerschnitte ist eine Zeitkonstante für das Abfließen von Fluid aus der Aufhaltekammer vorgebbar. Die Zeitkonstante skaliert mit einer vorgesehenen Aufhaltekammervolumenänderung, wobei insbesondere eine die Volumenänderung verursachende Stellkraft begrenzt, vorzugsweise im Wesentlichen konstant, vorliegt. Die Zeitkonstante ist insbesondere größer als die menschliche Reaktionszeit und kann z. B. eine Sekunde oder länger betragen. In der ersten Durchflussstellung liegt ein möglichst geringer Strömungswiderstand vor, so dass die Aufhaltekammer durch das Bewegungsventil schnell gefüllt und der Halter geöffnet werden kann.

Das Bewegungsventil kann zwischen wenigstens zwei Stellungen hin- und hergeschaltet werden. Durch das Bewegungsventil wird der Aktor in unterschiedliche Positionen verbracht. Die Druckquelle kann eine Druckquelle sein, die ungeregelt Drücke innerhalb eines Druckbandes erzeugt. Eine zuverlässige Druckregelung auf einen einzigen, einzuhaltenden Wert ist nicht nötig. Die pulsierenden Drücke, die häufig von ungeregelten Pumpen erzeugt werden, können unmittelbar auf das Bewegungsventil geleitet werden.

Eine funktional günstige Ausführungsform des Bewegungsventils weist mindestens einen Schaltzustand, vorzugsweise mindestens zwei Schaltzustände, wie z. B. einen ersten und einen zweiten Schaltzustand, auf. Zumindest der zweite Schaltzustand ist vorzugsweise ein bifunktionaler Zustand. Nach einem ersten Aspekt wird in dem zweiten Schaltzustand ein Druckabfall an der Ansteuerseite des Fluidfreischaltventils in einer, insbesondere hydraulischen oder pneumatischen, Ansteuereinheit ermöglicht. Das Unterschreiten eines Schwellendrucks liegt vor, wenn ein Druckwert an dem Fluidfreischaltventil anliegt, der niedriger als ein vorbestimmter Druck ist. Der zweite Schaltzustand umfasst eine Durchflussverbindung zwischen der Ansteuerseite und einem, insbesondere druckfreien, Vorratsbehälter oder einem sonstigen Reservoir. Nach einem zweiten Aspekt kann die zur Versorgung der Hydraulik oder Pneumatik verwendete Druckquelle abgesperrt sein, sodass eine Fluidzuflussverbindung von der Druckquelle zur Ansteuerseite des Fluidfreischaltventils blockiert ist. Die Durchflusssperrung ist unidirektional und liegt insbesondere zwischen der Druckquelle und einer Abzweigung. Aus der Druckquelle kann dabei kein Fluid in die erste Ventilsteuerleitung gelangen. Die Abzweigung verbindet fluidisch einerseits das Fluidfreischaltventil, nämlich ansteuerseitig, und andererseits den Aktor, vorzugsweise die Aufhaltekammer, mit dem Bewegungsventil. Es kann auch gesagt werden, dass das Bewegungsventil, insbesondere der zweite Schaltzustand des Bewegungsventils, eine Schaltbarkeit des Fluidfreischaltventils in den zweiten Zustand ermöglicht. Durch das Bewegungsventil, insbesondere durch den zweiten Schaltzustand wird die mittels Ansteuereinheit erlangte Sicherheit noch weiter erhöht. Es kann auch gesagt werden, der zweite Schaltzustand ermöglicht eine Anpassung einer Größe, die für ein Schalten des Fluidfreischaltventils vorliegen oder eingehalten werden muss, wie z. B. ein Druck oder ein Steuersignal, das z. B. als Druckniveau vorhanden sein kann. Das Fluidfreischaltventil benötigt eine gewisse Anzahl an Schaltvoraussetzungen. Eine Schaltvoraussetzung, damit das Fluidfreischaltventil z. B. in den zweiten Zustand gelangen kann, kann in der Unterschreitung eines Schwellendrucks eingestellt werden. Als Voraussetzung in einer solchen Konfiguration, damit das Fluidfreischaltventil überhaupt in den zweiten Zustand gelangt, ist ein Druck, mit anderen Worten ein niedrigerer Druck als ein Schwellendruck (also ein Druck in einem Niederniveau), in der ersten Steuerleitung schaltbeeinflussend. Nur bei Unterschreitung des Drucks lässt sich das Fluidfreischaltventil aus seinem ersten Zustand in einen anderen Zustand wie dem zweiten Zustand umschalten. Ein Überschreiten des Niederdrucks, also ein Druck jenseits des Niederniveaus, sperrt eine Bewegung des Fluidfreischaltventils, z. B. zumindest ein Kolben in eine Bewegungsrichtung.

Das Fluidfreischaltventil hat vorzugsweise eine Druckabbaustellung. Die Druckabbaustellung ist insbesondere einnehmbar, wenn das Bewegungsventil in dem Schaltzustand der ersten Durchflussstellung vorliegt. Vorzugsweise liegt eine Druckabbaustellung vor, wenn die dem Fluidfreischaltventil zugeordnete Kammer als Bewegungskammer des Aktors noch in einer Mindestgröße, einer als Spannkammer arbeitenden Größe, vorliegt. Damit lässt sich der Druckabbau in der Bewegungskammer des Aktors besonders schnell einleiten. Als ein Ergebnis kann der Halter ohne merkliche Zeitverzögerung geöffnet werden. Als Bewegungskammer wird die Kammer des Aktors bezeichnet, die mit dem Fluidfreischaltventil verbunden ist. Die Bewegungskammer dient vorzugsweise zur Zuführung einer Bewegungskraft auf den Spannkolben, um den Spannkolben in eine Vorzugsstellung, insbesondere eine Schließstellung, zu verbringen. Aufgrund von, in der Regel betragsmäßig sehr geringen, Materialelastizitäten ist die Spannkammergröße voluminöser als die Bewegungskammergröße in der Schließstellung des Aktors. In der Druckabbaustellung des Fluidfreischaltventils wirkt ein Aufhaltedruck über die erste Ventilsteuerleitung auf das Fluidfreischaltventil. Der Aufhaltedruck liegt außerdem an der Aufhaltekammer an. Der Aufhaltedruck wird vorzugsweise durch mindestens ein Bewegungsventil in dem ersten Schaltzustand zugeführt. Die erste Ventilsteuerleitung kann mit der ersten Steuerleitung über ein Zweistellungswechselventil verbunden sein.

Der Ventilsteuerleitung ist eine Ableitungsöffnung zugeordnet, anders gesagt zuschaltbar. Zu einer Ventilsteuerleitung gehört eine Ableitungsöffnung. Die Ableitungsöffnung kann verschlossen werden, um ein Abströmen von Fluid aus der Ventilsteuerleitung zu verhindern. In einem Schaltzustand erleichtert die Ableitungsöffnung den Abbau eines Drucks in der Ventilsteuerleitung. Durch den Abbau des Drucks wird eine schnellere Einnahme einer Stellung des Aktors ermöglicht. Durch Öffnen der Ableitungsöffnung wird ein Entlastungsweg für den Aktor, genauer für eine Kammer des Aktors, freigegeben.

Als ein Lösungsansatz steht zur Verfügung, dass die Ventilsteuerung des Fluidfreischaltventils über eine Stelldruckdifferenz erfolgt. Es ist möglich, das bistabile Fluidfreischaltventil in Abhängigkeit von einer Stelldruckdifferenz zu schalten. Eine Stelldruckdifferenz ist zum Beispiel dadurch bildbar, dass eine Differenz zwischen einem ersten Stelldruck und einem zweiten Stelldruck bestimmt oder ermittelt wird. In einer weiteren Ausgestaltung kann eine Stelldruckdifferenz eine Differenz zwischen einem Stelldruck und einem Schwellendruck sein. Es ist auch möglich, ein Fluidfreischaltventil in Abhängigkeit von zwei Stelldruckdifferenzen, wie eine Differenz eines ersten Stelldrucks von einem ersten Schwellendruck und eine Differenz eines zweiten Stelldrucks von einem zweiten Schwellendruck, zu schalten. Ein erster Stelldruck ist ein Fluiddruck, der ansteuerseitig an dem Fluidfreischaltventil vorliegt. Wenn der ansteuerseitige Fluiddruck gleich oder niedriger als ein voreingestellter Schwellendruck ist, so wird an dieser Ansteuerung ein Stellungswechsel des Fluidfreischaltventils erlaubt. Das Fluidfreischaltventil kann aber noch von weiteren Ansteuerbedingungen abhängig sein. Der Stellungswechsel des Fluidfreischaltventils führt vorteilhafterweise dazu, dass ein Spanndruck auf den Aktuator aufgeschaltet wird.

Sekundärsteuerseitig kann dem Fluidfreischaltventil ein zweiter Fluiddruck zugeführt werden. Ein Fluiddruck, der als zweiter Stelldruck an dem Fluidfreischaltventil anliegt, erlaubt ein Spanndruckschalten, wenn der Betrag des Fluiddrucks höher als ein zweiter Schwellendruckwert ist. Als zweiter Schwellendruck kann z. B. ein Druckwert in der Größenordnung um 1 bar herum, also z. B. 1 bar (exakt), am Fluidfreischaltventil voreingestellt sein. Ein Druckwert für den ersten Schwellendruck und ein Druckwert für den zweiten Schwellendruck können nahezu oder tatsächlich identisch sein, was bei vielen Ausführungsformen von als Fluidfreischaltventil geeigneten Ventilen der Fall ist. Es ist vorteilhaft, Ventile mit möglichst geringer Hysterese zu wählen. In anderen Ausführungsformen kann die Hysterese des Ventils sogar bewusst genutzt werden. Es kann ein zweiter Schwellendruck vorgesehen sein, der z. B. 10 % oder 20 % höher ist als der erste Schwellendruck, um die Einnahme eines Schaltzustands (im Vergleich mit weiteren Schaltzuständen) zu erleichtern.

Das Fluidfreischaltventil reagiert auf das Vorhandensein von Fluiddrücken an Ansteuerungen, z. B. an einer Ansteuerseite oder einer Sekundärsteuerseite.

Als bevorzugte Ventiltypen können schaltbare 3/2-Ventile (Drei-/Zwei-Ventile) verwendet werden. Für viele Ventile können 3/2-Ventile verwendet werden. Aufgrund deren einfacher Bauform lässt sich die Ansteuereinheit mit 3/2-Ventilen besonders kompakt aufbauen. Vorzugsweise wird mindestens ein Ventil als 3/2-Ventiltyp ausgebildet. Hierfür eignet sich z. B. das Fluidfreischaltventil oder mindestens ein Bewegungsventil. Es ist auch möglich, mindestens ein Ventil als elektromagnetisch schaltbares Ventil auszugestalten. Damit lassen sich Ansteuereinheiten besonders günstig in elektronische Steuerungen von Werkzeugmaschinen oder Prüfmaschinen integrieren. Eine weitere günstige Konfiguration sieht vor, dass mindestens ein Ventil mechanisch schaltbar ist. Bei einem mechanisch schaltbaren Ventil lassen sich z. B. elektromagnetische Störungen in hochempfindlichen Materialprüfungen vermeiden. Vorzugsweise ist das Fluidfreischaltventil zumindest einseitig über einen Fluiddruck mechanisch ansteuerbar, um die intrinsische Sicherheit unabhängig von einer Stromzufuhr bereitstellen zu können.

Das Fluidfreischaltventil ist vorteilhafterweise ein vorgesteuertes Ventil. Das Fluidfreischaltventil kann in einem hydraulischen Strang einer Ansteuereinheit angeordnet sein. Ein pneumatischer oder hydraulischer Strang kann die Bauteile Druckregelventil, Fluidfreischaltventil und Anschluss an den Aktor umfassen. An das Fluidfreischaltventil ist eingangsseitig das, insbesondere federvorgespannte, Druckregelventil angeschlossen. Der Druckregler (umgangssprachlich) bzw. das Druckregelventil liegt also, pneumatisch oder hydraulisch von der Druckquelle aus gesehen, an der Eingangsseite des Fluidfreischaltventils. Der Ausgang des Fluidfreischaltventils ist dann mit dem Aktor, genauer mit einer Spannkammer des Aktors, verbunden. Durch diese Schaltungskonfiguration kann ein ganz bestimmter, einstellbarer Druck dem Aktor zugeführt werden. Der Spannkammer, jener, die durch den zweiten Aktor in ihrer Größe veränderbar ist, sofern auf der gegenüberliegenden Kammer keine die Kraft des Aktors überschreitende Kraft aufgrund eines Drucks vorhanden ist, wird ein genau definierter Druck zugeführt bzw. ist zuführbar. Im Vergleich mit dem Strang zu der Spannkammer können die Druckverhältnisse in den übrigen Strängen der Schaltung (deutlich) ungeregelt sein. Im Extremfall reicht es einfach, wenn ein Mindestdruck vorhanden ist, der sich z. B. aus der Hysterese des Fluidfreischaltventils ergibt. Der Mindestdruck der Schaltung sollte oberhalb einer Schwelle vorhanden sein, die von der Hysterese des Fluidfreischaltventils abhängt.

Das Fluidfreischaltventil ist vorzugsweise ansteuerseitig mit einem federvorgespannten Schaltventil verbunden. Dieses federvorgespannte Schaltventil kann auch in einer Bezeichnungsweise als erstes federvorgespanntes Schaltventil betitelt werden. Die Verbindung kann über ein Wechselventil erfolgen. Der Fluiddruck wird dem Fluidfreischaltventil über die erste Ventilsteuerleitung zugeführt. Die erste Ventilsteuerleitung kann als ein ansteuerseitiger Anschluss des Fluidfreischaltventils an das Wechselventil ausgebildet sein. Insbesondere zusätzlich kann sekundärsteuerseitig ein zweites federvorgespanntes Schaltventil an das Fluidfreischaltventil angeschlossen sein. Vorzugsweise verbindet eine zweite Ventilsteuerleitung einen Anschluss, der insbesondere für den Anschluss an eine sekundäre Steuerleitung vorgesehen ist, des Fluidfreischaltventils mit einem zweiten federvorgespannten Schaltventil. Die Schaltventile sind vorzugsweise Zweistellungsventile. Die Zweistellungsventile können funktional als Freistellungsventile ausgestaltet sein, d. h., bei nicht ausreichender Bestromung oder bei nicht ausgelöster Betätigung gelangt das Zweistellungsventil in eine Vorzugsstellung, in der das Zweistellungsventil keine verändernde Betätigung des Fluidfreischaltventils auslöst. In einer Ausgestaltung kann das erste und/oder zweite Schaltventil eine erste Stellung aufweisen. Die erste Stellung ist aufgrund der Federvorspannung eine Vorzugsstellung. Die Vorzugsstellung ist insbesondere eine Druckentlastungsstellung, in der eine der Ventilsteuerleitungen durch Abströmen des Betätigungsmittels den in ihr vorhanden Druck verliert. Unter einem Blickwinkel kann die Druckentlastungsstellung als Fluidablassstellung bezeichnet werden, weil Fluid aus der jeweils verbundenen Ventilsteuerleitung abfließen kann. Der Abfluss erfolgt z. B. in ein druckfreies Reservoir. Eine zweite Stellung des ersten und/oder zweiten Schaltventils ist z. B. durch eine Gegenkraft gegen die Federvorspannung einnehmbar. Die zweite Stellung ist eine Druckdurchleitstellung. Mit anderen Worten kann die Druckdurchleitstellung als Fluideinlassstellung bezeichnet werden. Der Begriff "Fluideinlassstellung" besagt nach einem Aspekt, dass Fluid in die Ventilsteuerleitung einströmen kann. Das Fluid wird in der Druckdurchleitstellung aus einer Druckquelle, die z. B. eine Fluidpumpe und ein Fluidreservoir aufweist, bereitgestellt.

Die zuvor dargestellten Schaltungen und Ansteuereinheitenvarianten führen zu einem Halter bzw. zu einer Materialprüfmaschine, bei der die Schließgeschwindigkeit der Spannbacken des Halters im Ergebnis unerheblich ist. Vorrangig wird das hohe Maß an Sicherheit nicht durch eine Geschwindigkeitsbegrenzung bei der Schließbewegung der Spannbacke gesucht, sondern durch eine Begrenzung anderer, unfallträchtiger Parameter wie Kraft und/oder Druck. Der aus Normen und Richtlinien bekannte Wert von nur $10\ \frac{mm}{sec}$ bzw. $600\ \frac{mm}{\min}$ für die Bewegungsgeschwindigkeit der Spannbacke kann deutlich überschritten werden. Eine zuverlässige, zugleich nur mit einem geringen Unfallrisiko ausgestattete Materialprüfmaschine aufgrund des oder der vorhandenen (Proben-)Halter ist durch vorliegende Erfindung geschaffen, die mit beliebig einzustellenden Schließgeschwindigkeiten operieren kann. D. h., es kann und darf auch deutlich schneller als mit $600\ \frac{mm}{\min}$ die Schließ- bzw. Offenstellung eingenommen werden. Eine Verletzung von zwischen einer Materialprobe und einer Spannbacke eingespannten Finger oder Händen droht nicht mehr, trotzdem kann in äußerst kurzer Zeit die (noch nicht mit einer Versuchskraft beaufschlagte,) zu testende Materialprobe eingespannt werden.

Die vorgestellte Schaltung ist prinzipiell für jede Art von Halter für Materialprüfmaschinen, egal ob mit einer kleinen oder einer großen Spannbacke ausgestattet, einsetzbar. Durch die Schaltung kann die Kraft, alternativ der Druck, die oder der von der betätigten Spannbacke erzeugt wird, begrenzt werden. Verletzungen an oder auf Körperteilen wie Finger, Haut, Händen, Füßen, Beine oder Körperrümpfen sind vermeidbar, wenn anzuerkennende Grenzwerte unterschritten bleiben (z. B. kleiner 150 N, vorzugsweise kleiner als 100 N oder z. B. kleiner als 2 bis $3\ \frac{N}{mm^2}$).

Aus einem weiteren bzw. anderen Blickwinkel könnte auch über die vorliegende Erfindung das Folgende gesagt werden:

> Die Erfindung greift auf die Idee zurück, dass eine vollständige Entkopplung des Schließens und Öffnens auf der einen Seite und des Spannens auf der anderen Seite durchführbar ist. Der erste Klemmvorgang bzw. das Freigeben einer Probe erfolgt als Vorgang des Schließens bzw. Öffnens einer Spannbacke. Unabhängig hiervon, sofern die Schließstellung eingenommen oder vorhanden ist, findet der Spannvorgang mit gänzlich anderen, insbesondere höheren, Kräften statt. Eine Gefährdungsreduktion ist deswegen möglich, weil die Vorgänge des Öffnens und Schließens unterhalb einer Druck- und/oder Kraftschwelle durchgeführt werden, die als unproblematisch bzw. ungefährlich angesehen werden kann. Solche Kräfte können z. B. bei 150 - 200 N bzw. bei Drücken unterhalb von 2 bis $3\ \frac{N}{mm^2}$ angesiedelt werden.

Nach einem weiteren Aspekt nutzt die vorliegende Erfindung die Erkenntnis, dass nicht die Schließgeschwindigkeit die Gefährdung und die Unfallschäden hervorrufen, sondern die Kräfte und Drücke, die beim Schließen und beim Spannen auftreten. Wird eine Kraftbegrenzung beim Schließen vorgenommen, kann der Vorgang des Schließens als unkritisch angesehen werden. Schließgeschwindigkeitsunabhängig erfolgt eine Kraft- und/oder Druckbegrenzung des Aktors, Kolbens, Stößels oder der Spannbacke, mit anderen Worten, eines bewegenden Teils, das eine Kraft auf ein menschliches Körperteil ausüben kann.

Nach einem bemerkenswerten Aspekt werden die Druckverhältnisse in dem Aktor ausgewertet.

Das Anlegen eines Spanndrucks ist dank eines steuernden Ventils wie dem Fluidfreischaltventil nur dann möglich, wenn die Schließstellung eingenommen ist und der Druck in der Aufhaltekammer unterhalb eines Mindestdrucks, eines Schwellendrucks, liegt. Die Drücke in dem Aktor werden zum Schalten des steuernden Ventils, also insbesondere des Fluidfreischaltventils, genutzt. Eine in dem steuernden Ventil vorhandene Hysterese lässt sich für die Auswertung der Drücke in dem Aktor nutzen. Aufgrund der Hysterese in dem steuernden Ventil, z. B. in dem Fluidfreischaltventil, ergibt sich ein stabilisierter Zustand. Das Fluidfreischaltventil arbeitet bistabil in Reaktion auf die Drücke in dem oder den - angeschlossenen - Aktor(en).

Es kann auch hervorgehoben werden, dass der Aktor bzw. die Spannbacke bzw. der Halter selbst für eine distanzierte, nur das Äußere betrachtende Person eine Besonderheit darstellt. Der Halter befindet sich standardmäßig in einer Schließstellung. Nach einem Aspekt, ist die Schließstellung die Neutralstellung. Die Schließstellung ist die Vorzugsstellung. Die Schließstellung gilt als Dauerstellung. Sowohl das Spannen als auch die Offenstellung müssen aufgrund von Drücken eingenommen werden. Liegen keine fluidischen Drücke am Aktor an, z. B. pneumatische oder hydraulische Drücke, befindet sich der Aktor in der Schließstellung.

Insbesondere eine bidirektionale, aktorische Bewegungseinheit kann in einer Materialprüfmaschine vorgesehen sein, die ausgehend von einer Präferenzrichtung für eine Bewegung in eine zweite Bewegungsrichtung des Halters schaltbar ist. Eine Sicherheits-Fluiddruckzylindereinheit kann, insbesondere bidirektional, druckbegrenzt als zweiter und/oder vierter Aktor arbeiten. Mit anderen Worten, kann die Vorzugsstellung z. B. von einem ersten Anschlag auf einen zweiten, insbesondere gegenüberliegenden, Anschlag umschaltbar sein. Damit sind mögliche Quetschungen in jeder Phase eines Materialprobenwechsels nahezu ausgeschlossen.

Die zuvor dargestellten Kombinationen und Ausführungsbeispiele lassen sich auch in zahlreichen weiteren Verbindungen und Kombinationen betrachten.

## Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei

Figur 1 ein erstes Beispiel einer hydraulischen oder pneumatischen Schaltung für eine Materialprüfmaschine mit Halter und Ansteuereinheit,
Figur 2 ein zweites Beispiel anhand einer Schaltung für eine Materialprüfmaschine mit Halter und Ansteuereinheit,
Figur 3 ein weiteres Konzeptbeispiel einer Materialprüfmaschine mit Halter, wobei verschiedene Varianten zur Zuführung einer Sicherheitsschließkraft gemeinsam dargestellt sind, und
Figur 4 eine stark vereinfachte Darstellung des Typs der Lastrahmenprüfmaschine, auch Säulenprüfmaschine genannt, als eine Ausführungsform einer besonders günstigen Materialprüfmaschine zeigt.

## Figurenbeschreibung

Figur 1 zeigt von einer Materialprüfmaschine 1 jene Teile, die im Wesentlichen einen Halter betreffen, nämlich die Materialprüfmaschine 1 am Beispiel eines ersten Halters 3 und eines zweiten Halters 3' sowie eine Ansteuereinheit 10. Weitere, graphisch nicht eingezeichnete Komponenten, wie Lastrahmen, Fahrtraverse, Ansteuerelektronik, Prüfsoftware und Kraftmessdose, können, je nachdem, welche Materialprüfungen, insbesondere bei mechanischen Materialbelastungen, auszuführen sind, von den aus dem Stand der Technik bekannten Materialprüfungskonzepten hinzugenommen werden. Zur Förderung der Übersichtlichkeit sei auf die Passage "Technisches Gebiet" verwiesen, die an dieser Stelle vollständig zu inkludieren sein könnte. In dem ersten Halter 3 befindet sich der erste Aktor 11 in einer Schließstellung 5, wodurch die Spannbacke 7 an der Materialprobe 99 anliegt. Die Schließstellung 5 des Aktors 11 sorgt für eine ebenfalls gegebene Schließstellung 8 der Spannbacke 7. Der Aktor 11 erlaubt es, dass in der Schließstellung 8 der Spannbacke 7 leicht Schrägen (bis zu einem gewissen Maß) an der Materialprobe 99 ausgeglichen werden können. In der (strichliert dargestellten) Offenstellung 4 liegt die Spannbacke 7 an wenigstens einem Teil des Gehäuses des Linearzylinders 20 an, was in Figur 1 schematisch anhand der gestrichelten Linien durch eine Positionsangabe für die Spannbacke 7 eingetragen ist. In dem Linearzylinder 20 befindet sich zumindest ein Abschnitt des Spannkolbens 30. Aus einer Eintrittstiefe des Spannkolbens 30 ergibt sich eine Unterteilung des Linearzylinders 20 in eine Aufhaltekammer 24 und eine Bewegungskammer 23. Die Bewegungskammer 23 in der gezeigten Schließstellung 5 kann auch als Spannkammer 22 bezeichnet werden.

Ein zweiter Aktor 12 ist in der Bewegungskammer 23 angeordnet. Der Aktor 12 ist als schließkraftlimitierende Feder, gleichartig zu der Feder 62, ausgebildet. Die Sicherheitsschließkraft 61, die durch die Feder 62 ausgeübt wird, ist also betragsmäßig begrenzt. Ein dritter Aktor 13 ist Teil des zweiten Halters 3'. Zusammen mit dem ersten Aktor 11 bildet der dritte Aktor 13 ein Aktorenpaar 15. Ein vierter Aktor 14, in Gestalt der Schraubenfeder 62, übernimmt Aufgaben in dem Halter 3', wie der zweite Aktor 12 in dem Halter 3. Der vierte Aktor 14 stellt auch in funktionaler Entsprechung zum zweiten Aktor 12 eine Stellkraft 64 bereit, die den jeweiligen Spannkolben 30, 30' in der geschlossenen Aktorstellung, wie der Stellung 17, also in Richtung der am Halter 3, 3' gelagerten Materialprobe 99, 99', drückt. Diese Stellkraft 64 auf den Spannkolben 30, 30' kann auch als Schließdruck wahrgenommen werden. Die Halter 3, 3' können auch als Spanner 38 für die Endbereiche der Materialproben 99, 99' bezeichnet werden. Der erste Aktor 11 und der dritte Aktor 13 werden hydraulisch mit dem Druck eines Hydraulikmittels (nicht in dem Schematikplan eingezeichnet) aus der Druckquelle 97 über die Druckmittelleitung 50 versorgt.

Eine erste Druckmittelverbindung von der Druckquelle 97 ist, über das Druckregelventil 85 auf einen von außen einstellbaren Druckwert geregelt, durch das Fluidfreischaltventil 40 über Anschlüsse, wie den Anschluss 28, an die Bewegungskammer 23 herstellbar. Das Fluidfreischaltventil 40 weist einen ersten Zustand 41 und einen zweiten Zustand 42 auf. Das Schaltbild in Figur 1 zeigt das Fluidfreischaltventil 40 in der Druckabbaustellung 45. Hydraulikmittel kann aus der Bewegungskammer 23 in das Fluidreservoir 96 abfließen.

Bei einem Vorhandensein von Schaltbedingungen ist das Fluidfreischaltventil 40 in dem ersten Zustand 41 schaltbar (es kann aus dem ersten Zustand 41 herausgeschaltet werden), um eine Druckaufbaustellung 44 einzunehmen. In der Druckaufbaustellung 44 ist die Druckquelle 97 zur Bewegungskammer 23 über das Fluidfreischaltventil 40 durchverbunden. In dem geschalteten ersten Zustand 41 des Fluidfreischaltventils 40 bildet das Fluidfreischaltventil 40 von dem ersten Aktor 11, insbesondere der Spannkammer 22, eine Ableitung 58'. Das Stück der Verbindung 53, das zwischen dem Fluidfreischaltventil 40 und dem Aktor 11 zur Leitung des Fluids vorhanden ist, dient in dem ersten Schaltzustand 41 als Fluidableitung und in dem zweiten Schaltzustand 42 als Zuleitung des Fluids zu der Spannkammer 22 des Aktors 11. Ob die Voraussetzungen zum Schalten aus dem zweiten Zustand 42 des Fluidfreischaltventils 40 in den ersten Zustand 41 vorliegen, ergibt sich aus den an der Primärsteuerseite 47 und der Sekundärsteuerseite 48 des Fluidfreischaltventils 40 anliegenden Steuerdrücken, nämlich dem ersten Stelldruck 75 auf der Primärsteuerseite 47 und dem zweiten Stelldruck 76 auf der Sekundärsteuerseite 48 (wobei die Stelldrücke durch ihre äquivalenten Kraftpfeile symbolisiert sind). In dem ersten Zustand 41 des Fluidfreischaltventils 40 ist ein Druckaufbau in der Spannkammer 22 nicht möglich. Die Stellkraft 64 unterstützt das Ableiten von Fluid aus der Aufhaltekammer 24 über die Fluidabströmseite 18, und zwar vorbei an der Steuerabzweigung 49 durch das erste Bewegungsventil 78 in das Fluidreservoir 96. Das erste Bewegungsventil 78 befindet sich dabei in einem zweiten Schaltzustand 84 und weist in dieser Stellung eine zweite Durchflussverbindung 82 auf.

Die Bewegungsventile, wie das erste Bewegungsventil 78 und das zweite Bewegungsventil 79, sind gleichartig aufgebaut. Das erste Bewegungsventil 78 ist von dem zweiten Schaltzustand 84 in einen ersten Schaltzustand 83 schaltbar. In dem ersten Schaltzustand 83 stellt das Bewegungsventil 78 eine erste Durchflussverbindung 81 her. Eine Zustandsänderung der Bewegungsventile 78, 79 ist mit einem Taster, wie dem Taster 88", ausführbar. In der ersten Durchflussverbindung 81 steht die Druckquelle 97 mit der Aufhaltekammer 24 des Aktors 11 in einer fluidischen Verbindung.

In der in Figur 1 eingeschaltet dargestellten zweiten Durchflussstellung, d. h. bei vorhandener Durchflussverbindung 82 des Bewegungsventils 78, gelangt beim Abfluss des Fluids über die Steuerabzweigung 49 ein in der Aufhaltekammer 24 vorhandener Fluiddruck als erster Fluidabströmdruck 71 zu dem Wechselventil 65, das ein Zweistellungswechselventil ist.

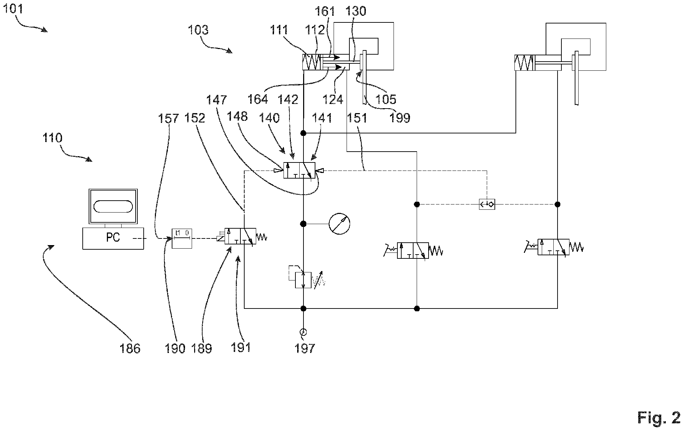

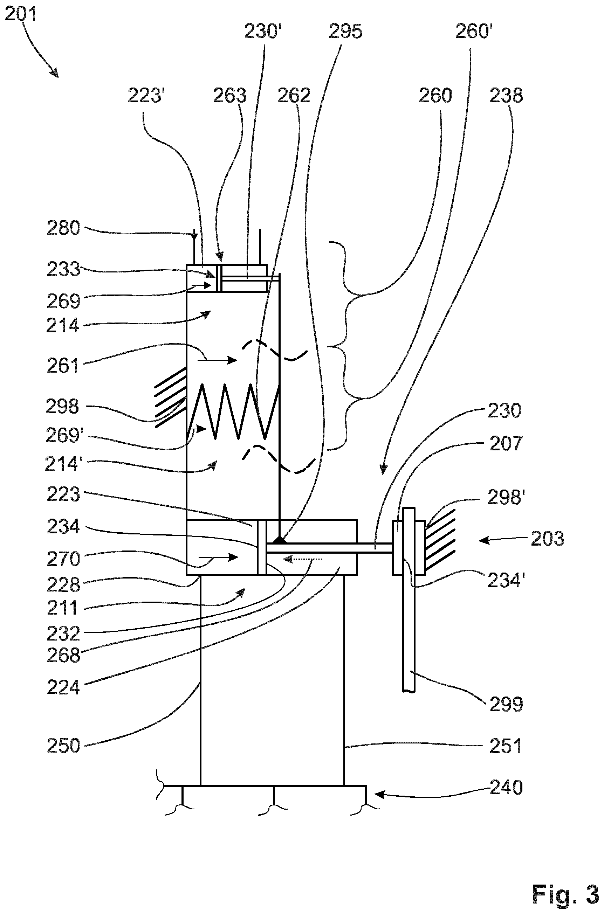

Es sei an dieser Stelle angemerkt, dass die in Figur 1 und den nachfolgenden Figuren 2 und 3 eingetragenen Pfeile schematisch eine Richtung der jeweiligen Drücke, wie z. B. der Fluidabströmdruck 71, oder eine Richtung der Kräfte zeigen.

An der Steuerabzweigung 49 sind die Aufhaltekammer 24, das erste Bewegungsventil 78 und das Zweistellungswechselventil 65 hydraulisch miteinander verbunden. Durch die erste Steuerleitung 54 gelangt Fluid von der Steuerabzweigung 49 in das Zweistellungswechselventil 65. In entsprechender Weise gelangt Fluid von dem dritten Aktor 13 durch das zweite Bewegungsventil 79 in das Fluidreservoir 96. Die Leitung zu dem Fluidreservoir 79 ist eine Fluidableitung 58. Zwischen dem dritten Aktor 13 und dem zweiten Bewegungsventil 79 ist eine Steuerabzweigung 49' angeordnet, die von der Druckmittelleitung, die insbesondere den dritten Aktor 13 und das zweite Bewegungsventil 79 fluidisch verbindet, durch die zweite Steuerleitung 55 zu einem zweiten Eingang des Zweistellungswechselventils 65 führt. Durch die Steuerleitung 55 hindurch liegt aus dem dritten Aktor 13 ein zweiter Fluidabströmdruck 72 an dem Zweistellungswechselventil 65 an. Die Druckweiche 66, die durch das Zweistellungswechselventil 65 realisiert ist, lässt den höheren der beiden Fluidabströmdrücke 71, 72 in die erste Ventilsteuerleitung 51 durch. In der gezeigten Stellung des Zweistellungswechselventils 65 wird aus der Aufhaltekammer 24 über den Ventilsteuerleitungsanschluss 26, über die Steuerabzweigung 49, über das Zweistellungswechselventil 65 und die erste Ventilsteuerleitung 51 der in Form des Stelldrucks 75 vorliegende Steuerdruck primärsteuerseitig auf das Fluidfreischaltventil 40 gegeben.

Wird das erste Bewegungsventil 78 in den ersten Schaltzustand 83 verbracht, so liegt der Druck aus der Druckquelle 97 über die Steuerabzweigung 49 und das Zweistellungswechselventil 65 als erster Stelldruck 75 an dem Fluidfreischaltventil 40 an. In diesem Schaltzustand der in Figur 1 gezeigten Schaltung liegt ein ansteuerseitig am Fluidfreischaltventil 40 befindlicher Druck der Druckquelle 97 allerdings oberhalb eines Schwellenwerts für das Fluidfreischaltventil 40, welches daher auf den vorliegenden geschalteten ersten Zustand 41, die Druckabbaustellung 45 für die Bewegungskammer 23 festgelegt ist. Die Fluidabströmdrücke 71, 72 werden insbesondere durch einen Verdrängungsdruck 74 sowie einen Staudruck 73 beim Abfließen von Fluid aus den Aktoren, wie den Aktoren 11, 13, aufrechterhalten, bis der Staudruck 73 vollständig abgebaut ist.

Die Eingabeeinheit 86 ist über die zweite Ventilsteuerleitung 52 mit der Sekundärsteuerseite 48 des Fluidfreischaltventils 40 verbunden. Der Anschluss 27 am Fluidfreischaltventil 40, der für einen (indirekten) Anschluss der Druckquelle 97 vorgesehen ist, ist in dem ersten Zustand 41 des Fluidfreischaltventils 40 verschlossen. Wenn sich die Aktoren 11, 13 in einer Stellung, wie der Stellung 17, befinden, in der über die Fluidabströmseiten wie der Fluidabströmseite 18 kein (nennenswertes) Fluid aus den Aktoren 11, 13 austreten kann, liegt der erste Stelldruck 75 unter einem Schwellenwert. Das Fluidfreischaltventil 40 ist von dem ersten Zustand 41 in den zweiten Zustand 42 schaltbar. Solange die Eingabeeinheit 86 in einem unbetätigten Zustand verharrt, bleibt das Fluidfreischaltventil 40 stabil in dem ersten Zustand 41. In Figur 1 ist der unbetätigte Zustand gezeigt, nämlich dadurch, dass das erste Schaltventil 91 und das zweite Schaltventil 92, die fluidisch, insbesondere hydraulisch seriell angeordnet sind, sich in einer ersten Stellung, nämliche in einer Fluidablassstellung 93 befinden. Die Fluidablassstellung 93 ist aufgrund von Federvorspannungen in den Schaltventilen 91, 92 eine Vorzugsstellung. Die Verbindung zwischen der zweiten Ventilsteuerleitung 52 und der Druckquelle 97 ist durch die Schaltventile 91, 92 unterbrechbar. Die zweite Ventilsteuerleitung 52 ist einströmseitig in einer Schaltstellung durch das zweite Schaltventil 92 mit einer Ableitungsöffnung 59 verbunden. Die Sekundärsteuerseite 48 des Fluidfreischaltventils 40 ist druckfrei. In dem druckfreien Zustand der Sekundärsteuerseite 48 ist das Fluidfreischaltventil 40 nicht in den zweiten Zustand 42 schaltbar. Der Term druckfrei kann sich, je nach konkret eingebautem Modell eines Fluidfreischaltventils 40, insbesondere auf einen Überdruck, der im Vergleich zu einem Referenzdruck Null bar beträgt, oder auf einen unter einen vorgegebenen, zweiten Schwellenwert abgefallenen Druck, aber auch auf einen Differenzdruck zu einem Druck in einem Fluidauffangbehälter, der das Reservoir 96 darstellt, beziehen. Der Druck in dem Fluidauffangbehälter 96 kann wertmäßig in einem Bereich des Umgebungsluftdrucks liegen.

Zur Schaltung des zweiten Zustands 42 ist es erforderlich, die jeweils paarweise vorhandenen Taster 88, 88' der Tippsicherheitsschalter 87, 87' zu betätigen. Das erste Schaltventil 91 und das zweite Schaltventil 92 müssen nebeneinander in eine zweite Stellung, wie die zweite Stellung 94, verbracht werden, anders gesagt, gleichzeitig in der zweiten Stellung sein. Dafür hat ein Bediener z. B. seine zwei Hände gleichzeitig zu benutzen. Durch eine Betätigung der Schaltelemente, in Figur 1 also der Schaltventile 91, 92, wird über die Leitung 57 für ein Umschaltsignal eine Steueranweisung, z. B. in Form eines hydraulischen Drucks, an Fluidfreischaltventil 40 gegeben. In der zweiten Stellung 94 der Schaltventile 91, 92 wird Fluiddruck aus der Druckquelle 97 durch die zweite Ventilsteuerleitung 52 auf die Sekundärsteuerseite 48 des Fluidfreischaltventils 40 gegeben. Durch diesen Druck erfolgt das Schalten des Fluidfreischaltventils 40 aus dem ersten Zustand 41 in den zweiten Zustand 42. Damit wird in der Stellung, in der der Ablauf geschlossenen ist, also der geschlossenen Stellung 17 der Aktoren 11, 13, eine Druckführung aus der Druckquelle 97 in die Spannkammer 22 ermöglicht. Voraussetzung für das tatsächliche Schalten des Fluidfreischaltventils 40 ist aber noch eine interne, ansteuerseitige Druckfreigabe des Fluidfreischaltventils 40. Das Fluidfreischaltventil 40 arbeitet aufgrund der Erfüllung mehrerer Schaltbedingungen. Es erfolgt ein sicherer Aufbau der Spannkraft über den Spanndruck 70, der sich additiv zum Stelldruck bzw. seinem Äquivalent, der Stellkraft 64 einstellt. Materialproben 99, 99' werden sicher in der Materialprüfmaschine 1 gehalten.

Nach der Beendigung der Betätigung der Schaltventile 91, 92 gelangen die Schaltventile durch Federkraft zurück in die erste Stellung 93, die Fluidablassstellung. Wenn sich das bistabile Fluidfreischaltventil 40 in dem zweiten Zustand 42 befindet, so verbleibt das Fluidfreischaltventil 40 auch in dem zweiten Zustand 42, also in der Druckaufbaustellung 44. Eine Zustandsänderung des Fluidfreischaltventils 40 von dem zweiten Zustand 42 in den ersten Zustand 41 ist durch Betätigung zumindest eines der Bewegungsventile 78, 79 herbeiführbar. Durch Betätigung der Bewegungsventile 78, 79 werden die Bewegungsventile 78, 79 von dem federvorgespannt eingenommenen zweiten Schaltzustand 84, der Durchflussstellung 82 in das Fluidreservoir 96, in den ersten Schaltzustand 83 verbracht. Das Bewegungsventil 78 und das Bewegungsventil 79 sind unabhängig voneinander betätigbar, sodass die Bewegung des ersten Aktors 11 und die Bewegung des zweiten Aktors 13, insbesondere das Öffnen, unabhängig voneinander überwacht werden können. Durch eine gewisse Ungleichzeitigkeit ist bei manueller Probenentnahme die Sicherheit erhöht. Eine Synchronisierung der Betätigung der Bewegungsventile 78, 79 kann in einer Ausführungsform für eine automatisierte Probenentnahme eine Zeitersparnis darstellen. Je nachdem, ob die Materialprüfmaschine 1 für ein manuelles Probeneinlegen oder ein automatisiertes Probenbeschicken konzipiert ist, lässt sich die Ansteuerung über die Bewegungsventile 78, 79 zeitgleich oder asynchron ausgestalten. Ein Aufhaltedruck 68 wird in die Aufhaltekammer, wie die Aufhaltekammer 24, gelassen, der ansteuerseitig, also an der Primärsteuerseite 47, wirkt und das Fluidfreischaltventil 40 vom zweiten Schaltzustand 42 in den ersten Schaltzustand 41 bringt. Wird nur eines der Bewegungsventil 78, 79 betätigt, so verbleibt der dem unbetätigten Bewegungsventil 79, 78 zugeordnete, jeweilige Aktor 13, 11 durch die Stellkraft 64 der Stellkraftbegrenzungseinheit 60 geschlossen. Damit wird eine sichere Entnahme eines zweiseitig gehalterten Materialprobe 99, 99' erleichtert.

In Figur 2 ist eine weitere Materialprüfmaschine 101 anhand ihrer schematisch dargestellten computerisierten Hydraulikschaltung gezeigt, die zahlreiche Komponenten und Konfigurationen entsprechend der Materialprüfmaschine 1 aus Figur 1 aufweist. Die Erläuterungen zu Figur 1 gelten auch für die Ausführungsform nach Figur 2 für die gleichartig oder sogar identisch realisierten Baugruppen und Komponenten; es darf daher auf Figur 1 an Stelle einer vollumfassenden Erläuterung verwiesen werden. Wie in Figur 2 zu sehen ist, ist im funktionalen Zentrum der schematischen Schaltung ein Fluidfreischaltventil 140 angeordnet, das einen ersten Zustand 141 und einen zweiten Zustand 142 einnehmen kann. Das Fluidfreischaltventil 140 ist Teil der Ansteuereinheit 110, mit der der Halter 103 gesteuert, betätigt und kontrolliert wird. Die Sicherheitsschließkraft 161 wird z. B. als Stellkraft 164 durch einen Aktor, wie den zweiten Aktor 112, kontinuierlich bereitgestellt. Der zweite Aktor 112 ist in dem ersten Aktor 111 angeordnet. Der zweite Aktor 112 verschiebt den Spannkolben 130 in eine Schließstellung 105, insbesondere auf die Materialprobe 199 zu. In dieser Bewegungsphase, der Phase des Schließens, wird aus der Aufhaltekammer 124 (nicht dargestelltes) Fluid durch die Stellkraft 164 herausgedrückt. Die Stellkraft 164 bildet einen Verdrängungsdruck, welcher über die erste Ventilsteuerleitung 151 an der Ansteuerseite 147 des Fluidfreischaltventils 140 anliegt. Die Sekundärsteuerseite 148 des Fluidfreischaltventils 140 ist über die zweite Ventilsteuerleitung 152 betätigbar. Die Ansteuereinheit 186 dient zur Betätigung des Schaltventils 191. Die Ansteuereinheit 186 umfasst einen Steuerrechner PC der Materialprüfmaschine 101. Der Steuerrechner PC kann ein Stellsignal 190 aussenden, das z. B. über die Umschaltsignalleitung 157 zu dem Schaltventil 191 gelangt. Das Stellsignal 190 ergeht z. B. nach einer Startzeit 0 zu einem Betätigungszeitpunkt t1. Das Stellsignal 190 steuert das elektromagnetisch betätigbare Schaltventil 191 an, sodass das Schaltventil 191 in den Betätigungszustand 189 übergeht. Der Betätigungszustand 189 entspricht der zweiten Stellung 94 des Schaltventils 91 in Figur 1. Die Schaltung nach Figur 2 ist dadurch einfacher im Vergleich zu der Schaltung nach Figur 1 gestaltet, dass das zweite Schaltventil 92 für die (in Figur 2 zu sehenden) Ansteuereinheit 186 nicht vorgesehen bzw. nicht erforderlich ist. Der Betätigungszustand 189 wird entgegen einer Federvorspannung des Schaltventils 191 eingenommen. In der federvorgespannten Vorzugsstellung des Schaltventils 191 ist der Druck aus der Druckquelle 197, wie in Figur 2 gezeigt, abgesperrt. In dem Betätigungszustand 189 liegt der Druck aus der Druckquelle 197 über das Schaltventil 191 und durch die zweite Ventilsteuerleitung 152 hindurch an der Sekundärsteuerseite 148 des Fluidfreischaltventils 140 an, um das Fluidfreischaltventil 140, abhängig von dem Druck an der Ansteuerseite 147, in den zweiten Zustand 142 durchzuschalten. Das Fluidfreischaltventil 140 ist, um eine möglichst hohe Sicherheit zu haben, nur über Steuerdrücke durch Ventilsteuerleitungen 151, 152 schaltbar. In dem zweiten Zustand 142 wird Druck aus der Druckquelle 197 auf den Spannkolben 130 gegeben, der gleichgerichtet zu der Stellkraft 164 auf den Spannkolben 164 wirkt. Der Spannkolben 130 liegt über seine Spannkraft an der Materialprobe 199 an. In Übereinstimmung mit hydraulischen Gepflogenheiten sind Steuerleitungen, wie die Steuerleitungen 151, 152, gestrichelt gezeichnet, um diese von Druckleitungen in den hydraulischen Schaltungen besser unterscheiden zu können. Damit ist insbesondere eine sichere Fernbedienung der Materialprüfmaschine 101, insbesondere an einem Steuerrechner PC möglich.

In Figur 3 sind anhand einer ausschnittsweisen Darstellung ausgewählter Bereiche der Schaltungen nach Figur 1 und Figur 2 weitere vorteilhafte Beispiele einer Materialprüfmaschine 201 gezeigt. Figur 3 stellt Bereiche um einen Aktor wie den Aktor 11, 111 oder den Aktor 13, 113 als Aktor 203 mit einigen Einzelheiten dar, die zusätzlich oder alternativ zu den in den Figuren 1 und 2 gezeigten Ausführungsbeispielen realisiert werden können. Ein Halter 203 ist schematisch dargestellt. Der Aktor 211 drückt mit der Spannbacke 207 gegen die Materialprobe 299, wodurch der Spanner 238 mithilfe des Aktors 211 und der Lagerung 298' die Materialprobe 299 sicher halten kann. Die Spannbacke 207 liegt mit der Spannfläche 234' auf der Materialprobe 299 auf. Die Aufhaltekammer 224 des Aktors 211 ist unmittelbar über die erste Ventilsteuerleitung 251 mit dem Fluidfreischaltventil 240 (vgl. die entsprechenden Fluidfreischaltventile 40, 140 und deren hydraulische Versorgung aus Druckquelle 97, 197 in Figur 1 bzw. Figur 2 sowie die sekundärseitigen Anschlüsse) verbunden. Die Druck(mittel)leitung 250, ausgehend von dem Fluidfreischaltventil 240, ist über den Anschluss 228 mit der Bewegungskammer 223 des Aktors 211 verbunden. Je nach Zustand des Fluidfreischaltventils 240 ist ein Spanndruck 270 über den Anschluss 228 auf die Spannfläche 234 aufbringbar. Die bewegbare Aufhaltefläche 232 begrenzt die Aufhaltekammer 224. Zum Öffnen des Aktors 211 ist die Aufhaltefläche 232 über die erste Ventilsteuerleitung 251 mittels eines weiteren Schaltventils (nicht gezeigt, vgl. Schaltventil 78 in Figur 1) mit Fluiddruck beaufschlagbar. Strömt ein Fluid mit seinem Druck in die Aufhaltekammer 224 ein, bewegt ein Aufhaltedruck 268 den Spannkolben 230 von der Materialprobe 299 weg. Die Vorzugsstellung des Spannkolbens 230 mit der Spannbacke 207 an der Materialprobe 299 wird durch eine der beispielhaft gezeigten Stellkraftbegrenzungseinheiten 260, 260' eingenommen, welche insbesondere die Stellkraft 261 bereitstellen, wenn wenigstens eine den Beispielen entsprechende Stellkraftbegrenzungseinheit 260, 260' vorhanden ist.

Am Rande bemerkt, die Länge der Druck- bzw. Kraftpfeile deutet lediglich eine betragsmäßige Größe an, sie soll aber nicht als konkrete Wiedergabe einer betragsmäßigen Relation der Drücke oder Kräfte vorliegend verstanden werden. Die exakte Auslegung der Relation wird durch die jeweilige Anwendung bestimmt.

In der Stellkraftbegrenzungseinheit 260 ist ein zweiter Aktor 214 vorgesehen, der über einen Fluiddruckbegrenzer 280 versorgt wird. Ein Fluiddruck wirkt auf die Antriebsfläche 233 und erzeugt einen Schließdruck 269 in der Bewegungskammer 223'. Gestützt gegen eine gemeinsame Lagerung 298, die als Lagerung 298 für den Aktor 211 und für den Aktor 214 zur Verfügung steht, schiebt der Kolben 230' über eine mechanische Verbindung 295 den Spannkolben 230 in Richtung der Materialprobe 299. Neben dem zweiten Aktor 214, der im Sinne eines Hydraulikaktors arbeitet, kann ein weiterer zweiter Aktor 214', der wie ein Federaktor arbeitet, vorhanden sein.

Es ist auch möglich, als Alternative zu dem zweiten Aktor 214 den andersartig aufgebauten zweiten Aktor 214' vorzusehen. Wie gesagt, ist es möglich, in einer Ausführungsform einen zweiten Aktor 214 mit einem weiteren zweiten Aktor 214' zu kombinieren, um eine Stellkraftbegrenzungseinheit 260, 260' bereitzustellen. Die Stellkraftbegrenzungseinheit 260' umfasst als zweiten Aktor 214' eine Feder 262, deren Federkraft limitierend für den Sicherheitskraftvektor 261 ist. Die Feder 262 kann in einer Ausführungsform einen Schließdruck 269' bereitstellen. Der Schließdruck 269' bewegt über die mechanische Verbindung 295 den Spannkolben 230 entgegen der Richtung des Aufhaltedrucks 268, bis die Spannfläche 234' auf der Materialprobe 299 aufliegt. Sowohl die Fluiddruckzylindereinheit 263 als auch die Feder 262 können hierbei außerhalb des ersten Aktors 211 angeordnet sein. Damit lässt sich die zuverlässige Funktion der Stellkraftbegrenzungseinheiten 260, 261 leichter kontrollieren.

In Figur 3 sind die Komponenten der Stellkraftbegrenzungseinheit 260, 260' mit einem seitlichen Versatz zu dem Spannkolben 230 dargestellt, wodurch die schematisch Darstellung der Ausführungsformen besonders gut zu sehen sind. Eine solche, in Figur 3 vorrangig schematisch dargestellte Anordnung kann in einer räumlichen Ausgestaltung z. B günstig aufgrund des verfügbaren Bauraums ebenfalls - in Übereinstimmung mit der schematischen Darstellung - abgesetzt angeordnet sein. Beispielsweise zur Reibungsminderung und zur Vermeidung von Querkräften ist eine Stellkraftbegrenzungseinheit 260, 260' vorzugsweise zu einem Aktor 211 ausgerichtet angeordnet, wobei der Sicherheitskraftvektor 261 auf einer Achse mit dem Spanndruck 270 entlang dem Spannkolben 230 gerichtet ist. Nach einem anderen Aspekt wird der Sicherheitskraftvektor 261 vorzugsweise durch einen zweiten Aktor 214, 214', der auf einer Zentralachse (nicht eingezeichnet) des Spannkolbens 230 angeordnet ist, eingebracht.

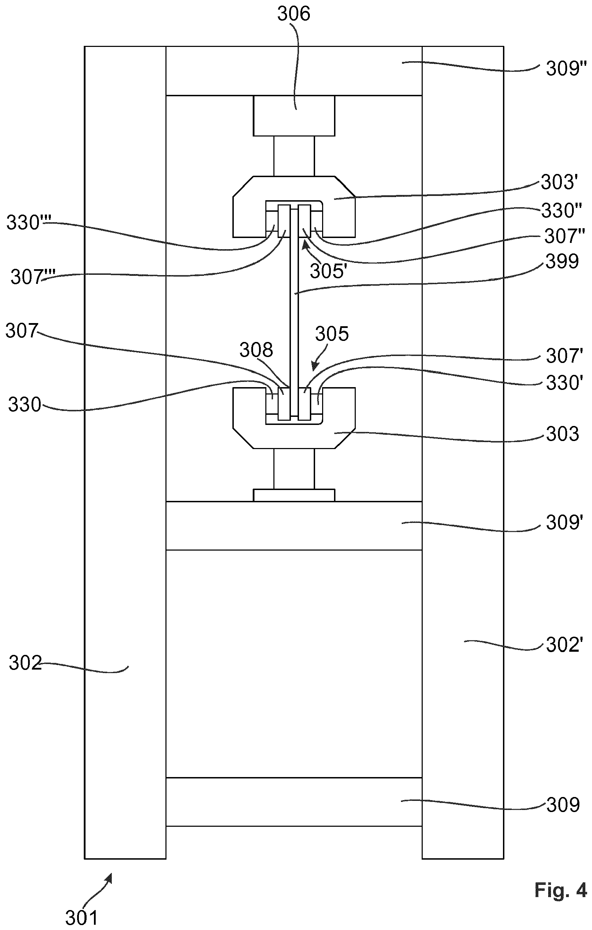

Figur 4 zeigt als Materialprüfmaschine 301 in vereinfachter Darstellung den Typ einer Säulenprüfmaschine. Die Säulenprüfmaschine, die auch als Traversenprüfmaschine gelegentlich bezeichnet wird, hat zumindest zwei Säulen, eine erste Säule 302 und eine zweite Säule 302'. An den beiden Säulen 302, 302' sind querverlaufend zur Erstreckungsrichtung der Säulen 302, 302' Traversen 309, 309', 309" angebracht. Die beiden äußeren Traversen 309, 309" stehen als Sockeltraverse 309 und als Kopftraverse 309" zur Verfügung. Zwischen der Sockeltraverse 309 und der Kopftraverse 309" gibt es eine Fahrtraverse 309'. Die Fahrtraverse 309' befindet sich im mittleren Bereich an den beiden Säulen 302, 302'. Über die Fahrtraverse 309' kann eine Kraft auf eine Probe 399 aufgebracht werden. Die beiden äußeren Traversen, die Sockeltraverse 309 und die Kopftraverse 309" bilden zusammen mit den Säulen 302, 302' einen Rahmen. Zwischen den Säulen 302, 302' befindet sich ein Prüfraum, in dem die Probe 399 angeordnet werden kann. Damit eine Prüfkraft auf die Probe 399 aufgebracht werden kann, wird die Probe 399 zwischen Spannbacken 307, 307', 307", 307"' eingespannt. Die Spannbacken 307, 307', 307", 307"' werden von Spannkolben 330, 330', 330", 330'" geführt und bewegt. Jeder Spannbacke 307, 307', 307", 307"' ist ein eigener Spannkolben 330, 330', 330", 330'" zugeordnet. Mithilfe der Spannkolben 330, 330', 330", 330'" können die Halter 303, 303' in eine Schließstellung 305, 305' verbracht werden. In der Schließstellung 305, 305' ist der an den Spannbacken 307, 307', 307", 307"' anliegende Teil der Probe 399 kraftschlüssig gehalten. Die Schließstellung 308 der Spannbacken 307, 307' entspricht der Schließstellung 305 des Halters 303. Sind die Spannbacken 307, 307' in einer Schließstellung 308, so ist auch der Halter 303, der die Spannbacken 307, 307' umfasst, in einer Schließstellung 308. Ist die Kraft in der Schließstellung 308 der Spannbacken 307, 307" ausreichend groß, kann mittels eines Verfahrens der Fahrtraverse 309' eine Versuchskraft auf die Probe 399 aufgebracht werden. Die Versuchskraft bzw. die in der Materialprüfmaschine 301 wirkenden Kräfte, die insbesondere auf die Probe 399 einwirken, können mit einem Kraftaufnehmer 306 gemessen werden. Ein günstiger Ort für die Aufnahme der Messkraft mittels Kraftaufnehmer 306 ist eine Unterseite der Kopftraverse 309", vorzugsweise in unmittelbarer axialer Verlängerung einer Spannrichtung der Probe 399. Der zweite Halter 303' dient als Gegenhalter. Der erste Halter 303 dient als Kraft einwirkender Halter. Der Kraftaufnehmer 306 ruht an der Kopftraverse 309". Zum Schließen der Spannbacken 307, 307', 307", 307"' kann die Materialprüfmaschine 301 mit einer Ansteuereinheit ausgestattet werden, mit einer Ansteuereinheit wie z. B. die Ansteuereinheit 10 (Figur 1) oder die Ansteuereinheit 110 (Figur 2) ausgestaltet ist.

Es sei erlaubt, die Errungenschaft hervorzuheben, dass entsprechende Stellkraftbegrenzungseinheiten 260, 260' mit geringem Arbeitsaufwand an Materialprüfmaschinen 1, 101, 201 nachrüstbar oder austauschbar sind. Die Stellkraftbegrenzungseinheiten 260, 260' können als Nachrüstsatz gestaltet sein. Die Stellkraftbegrenzungseinheiten 260, 260' können auch dazu eingesetzt werden, um einen Halter für eine Schutzeinrichtung, wie einen Schutzkäfig, zu bewegen, um damit den Zugang z. B. zu einer Materialprüfmaschine, die mit besonders hohen Kräften arbeitet, zu sichern.

Die in den einzelnen Figuren, Figur 1, Figur 2, Figur 3 und Figur 4, gezeigten Ausgestaltungsmöglichkeiten lassen sich auch untereinander in beliebiger Form verbinden. Insbesondere können Elemente aus einer Ausführungsform mit einer anderen Ausführungsform vorteilhaft kombiniert werden.

Für einen Fachmann ist verständlich, dass die anhand von Figur 4 erläuterte Anwendung der Erfindung auch auf Säulenprüfmaschinen übertragbar ist, die mit mehr oder weniger Säulen einen Rahmen für einen Prüfraum bilden. Die Erfindung lässt sich bei C-förmigen Prüfmaschinen, so genannten Ein-Säulen-Prüfmaschinen, genauso einsetzen - und auch nachrüsten - wie bei Materialprüfmaschinen mit drei, vier und mehr Säulen.

**Bezugszeichenliste**

| **Bezugszeichen** | **Bezeichnung** |
|---|---|
| 1, 101, 201, 301 | Materialprüfmaschine |
| 302, 302' | Säule, insbesondere erste Säule und zweite Säule |
| 3, 3', 103, 203, 303, 303' | Halter |
| 4 | Offenstellung, insbesondere des Halters |
| 5, 105, 305, 305' | Schließstellung, insbesondere geschlossener Halter |

(fortgesetzt)

| Bezugszeichen | Bezeichnung |
| --- | --- |
| 306 | Kraftaufnehmer |
| 7, 207, 307, 307', 307", 307'" | Spannbacke, insbesondere Haltebacke |
| 8, 308 | Schließstellung der Spannbacke |
| 309, 309', 309" | Traverse, insbesondere Sockeltraverse, Fahrtraverse und Kopftraverse |
| 10, 110 | Ansteuereinheit |
| 11, 111, 211 | erster Aktor |
| 12, 112 | zweiter Aktor |
| 13 | dritter Aktor |
| 14, 214, 214' | vierter Aktor |
| 15 | Aktorenpaar |
| 17 | Aktorstellung, insbesondere geschlossene Stellung |
| 18 | Fluidabströmseite, insbesondere eines Aktors |
| 20 | Linearzylinder |
| 22 | Kammer des Aktors, insbesondere Spannkammer |
| 23, 223, 223' | Kammer des Aktors, insbesondere Bewegungskammer |
| 24, 124, 224 | Kammer des Aktors, insbesondere Aufhaltekammer |
| 26 | Ventilsteuerleitungsanschluss |
| 27 | Anschluss für die Druckquelle |
| 28, 228 | Anschluss an den Aktor |
| 30, 30', 130, 230, 230', 330, 330', 330", 330'" | Spannkolben |
| 232 | Aufhaltefläche |
| 233 | Antriebsfläche |
| 234, 234' | Spannfläche |
| 38, 238 | Spanner |
| 40, 140, 240 | Fluidfreischaltventil |
| 41, 141 | erster Zustand, insbesondere des Fluidfreischaltventils |
| 42, 142 | zweiter Zustand, insbesondere des Fluidfreischaltventils |
| 44 | Druckaufbaustellung des Fluidfreischaltventils |
| 45 | Druckabbaustellung des Fluidfreischaltventils |
| 47, 147 | Primärsteuerseite des Fluidfreischaltventils, insbesondere Ansteuerseite |
| 48, 148 | Sekundärsteuerseite |
| 49, 49' | Steuerabzweigung |
| 50, 250 | Druckmittelleitung |
| 51, 151, 251 | erste Ventilsteuerleitung |
| 52, 152 | zweite Ventilsteuerleitung |
| 53 | Verbindungsleitung |
| 54 | erste Steuerleitung |
| 55 | zweite Steuerleitung |
| 57, 157 | Leitung, insbesondere für ein Umschaltsignal |
| 58, 58' | Fluidableitung |
| 59 | Ableitungsöffnung |
| 60, 260, 260' | Stellkraftbegrenzungseinheit |
| 61, 161, 261, | Sicherheitsschließkraft, insbesondere Sicherheitskraftvektor |
| 62, 262 | Feder, insbesondere schließkraftlimitierte Feder |
| 263 | Fluiddruckzylindereinheit, insbesondere Schließkraftlimitierung |
| 64, 164 | Stellkraft |
| 65 | Wechselventil, insbesondere Zweistellungsrückschlagventil |
| 66 | Druckweiche, insbesondere Durchlass für höchsten Druck |

(fortgesetzt)

| Bezugszeichen | Bezeichnung |
|---|---|
| 68, 268 | Aufhaltedruck |
| 269, 269’ | Schließdruck |
| 70, 270 | Spanndruck |
| 71 | erster Fluidabströmdruck |
| 72 | zweiter Fluidabströmdruck |
| 73 | Staudruck |
| 74 | Verdrängungsdruck |
| 75 | erster Stelldruck |
| 76 | zweiter Stelldruck |
| 78 | erstes Bewegungsventil |
| 79 | zweites Bewegungsventil |
| 280 | Druckbegrenzer |
| 81 | erste Durchflussstellung, insbesondere Durchflussverbindung |
| 82 | zweite Durchflussstellung, insbesondere Durchflussverbindung |
| 83 | erster Schaltzustand des Bewegungsventils |
| 84 | zweiter Schaltzustand des Bewegungsventils |
| 85 | Druckregelventil |
| 86, 186 | Eingabeeinheit |
| 87, 87’ | Tippsicherheitsschalter |
| 88, 88’, 88" | Taster |
| 189 | Betätigungszustand |
| 190 | Stellsignal |
| 91, 191 | erstes Schaltventil, insbesondere federvorgespanntes Schaltventil |
| 92 | zweites Schaltventil, insbesondere federvorgespanntes Schaltventil |
| 93 | erste Stellung des Schaltventils, insbesondere Fluidablassstellung |
| 94 | zweite Stellung des Schaltventils, insbesondere Fluideinlassstellung |
| 295 | mechanische Verbindung |
| 96 | Fluidreservoir, insbesondere Sumpf |
| 97, 197 | Druckquelle |
| 298, 298’ | Lagerung |
| 99, 99’, 199, 299, 399 | Materialprobe, insbesondere Endbereich für die Einspannung |
| PC | Steuerrechner, insbesondere Start von Prüfungen |
| t1 | Betätigungszeitpunkt |
| 0 | Startzeit |

## Patentansprüche

1. Halter (3, 3’, 103, 203, 303, 303’) mit Ansteuereinheit (10, 110), vorzugsweise in einer Materialprüfmaschine (1, 101, 201, 301) für Materialproben (99, 99’, 199, 299, 399), umfassend mindestens einen mit einem Fluid aus einer Druckquelle (97, 197) beaufschlagbaren Aktor (11, 12, 13, 14, 111, 112, 211, 214, 214’) mit mindestens einem Spannkolben (30, 30’, 130, 230, 230’, 330, 330’, 330", 330'"),
wobei zwischen der Druckquelle (97, 197) und dem Aktor (11, 12, 13, 14, 111, 112, 211, 214, 214’) ein bi-stabiles Fluidfreischaltventil (40, 140, 240) vorgesehen ist, das mindestens einen ersten Zustand (41, 141), aus dem das Fluidfreischaltventil (40, 140, 240) zur Einnahme einer Druckaufbaustellung (44) herausschaltbar ist, und einen zweiten Zustand (42, 142), in dem ein Druckaufbau in einer Spannkammer (22) durch Verbindung der Druckquelle (97, 197) mit der Spannkammer (22) ermöglicht ist, aufweist,
**dadurch gekennzeichnet, dass** der Halter so ausgebildet ist, dass im ersten Zustand des Fluidfreischaltventils (40, 140, 240) durch den Aktor (11, 13, 111, 211) mittels dem Spannkolben (30, 30’, 130, 230, 230’, 330, 330’, 330", 330"’) und einer Stellkraft (64, 164) aus einem zweiten Aktor (12, 14, 112, 214, 214’), der an dem Spannkolben (30, 30’, 130, 230, 230’, 330, 330’, 330", 330"’) angeschlossen ist, eine Schließstellung (5, 105) einnehmbar ist, bei deren Erreichen in einer Kammer (24, 124, 224) des Aktors (11, 13, 111, 211) ein Druck mit einem Schwellendruck verglichen wird, und dass das Fluidfreischaltventil (40, 140, 240) nur dann in den zweiten Zustand (42, 142) wechselt, wenn in einer ersten Ventilsteuerleitung (51, 151, 251), die von der Kammer (24, 124, 224) des Aktors (11, 13, 111, 211) mit Druck versorgbar ist, der Schwellendruck unterschritten ist und
in einer zweiten Ventilsteuerleitung (52, 152) ein Umschaltsignal an dem Fluidfreischaltventil (40, 140, 240) anliegt.

**2.** Halter (3, 3', 103, 203, 303, 303') nach Anspruch 1,
**dadurch gekennzeichnet, dass**
der zweite Aktor (12, 112) eine Stellkraftbegrenzungseinheit (60, 260, 260') umfasst, welche die Stellkraft (64, 164), insbesondere kontinuierlich, bereitstellt, durch die vorzugsweise eine Schließstellung (8) an mindestens einer Spannbacke (7, 207, 307, 307', 307", 307'"), wie einer Zentrierspannbacke, des Halters (3, 3', 103, 203, 303, 303') einnehmbar ist.

**3.** Halter (3, 3', 103, 203, 303, 303') nach Anspruch 1 oder Anspruch 2,
**dadurch gekennzeichnet, dass**
der Aktor (11, 13, 111, 211) einen quellendruckbeaufschlagbaren Linearzylinder (20), der insbesondere mindestens einen endseitigen Ventilsteuerleitungsanschluss (26) aufweist, umfasst, wobei
insbesondere ein Fluidabströmdruck (71, 72) einer Aufhaltekammer (24, 124, 224) des Linearzylinders (20) durch die erste Ventilsteuerleitung (51, 151, 251) an dem Fluidfreischaltventil (40, 140, 240) ansteuerseitig anliegt und der Druckaufbaustellung (44) des Fluidfreischaltventils (40, 140, 240) entgegensteht.

**4.** Halter (3, 3', 103, 203, 303, 303') nach einem der vorhergehenden Ansprüche,
**dadurch gekennzeichnet, dass**
mindestens zwei Aktoren (11, 13, 111, 211), beispielsweise Aktorenpaare (15), wie der erste (11, 111, 211) und ein dritter Aktor (13), vorgesehen sind und mindestens ein Wechselventil (65) den Aktoren (11, 13, 111, 211), insbesondere dem ersten und dem dritten, fluidabströmseitig nachgeordnet ist, und durch das Wechselventil (65), das vorzugsweise ein durch Druckunterschiede schaltbares Zweistellungsrückschlagventil ist, ein höchster Fluidabströmdruck der Aktoren (11, 13, 111, 211), insbesondere des Aktorenpaars (15), an dem Fluidfreischaltventil (40, 140, 240) als Stelldruck anliegt.

**5.** Halter (3, 3', 103, 203, 303, 303') nach einem der vorhergehenden Ansprüche,
**dadurch gekennzeichnet, dass**
der Spannkolben (30, 30' 130, 230, 230', 330, 330', 330", 330"') eine druckbeaufschlagbare Aufhaltefläche (232) aufweist, wobei in einer Aufhaltestellung des Spannkolbens (30, 30', 130, 230, 230', 330, 330', 330", 330'") eine druckbeaufschlagbare Antriebsfläche (233) des Spannkolbens (30, 30', 130, 230, 230', 330, 330', 330", 330'") durch eine Fluidableitung (58, 58') fluiddruckentlastet ist und insbesondere die Aufhaltefläche (232) fluiddruckbeaufschlagt ist.

**6.** Halter (3, 3', 103, 203, 303, 303') nach einem der vorhergehenden Ansprüche,
**dadurch gekennzeichnet, dass**
dem Spannkolben (30, 30', 130, 230, 230', 330, 330', 330", 330'") zumindest einseitig, insbesondere antriebsflächenseitig, eine schließkraftlimitierte Feder (62, 262) und/oder eine schließkraftlimitierende Fluiddruckzylindereinheit (263) zugeordnet ist, wodurch der Spannkolben (30, 30', 130, 230, 230', 330, 330', 330", 330'") insbesondere mit einer Schließkraft von maximal 150 Newton und/oder einem Schließdruck (269, 269') von bis zu maximal $2\ \frac{N}{mm^2}$ bewegbar ist.

**7.** Halter (3, 3', 103, 203, 303, 303') nach einem der vorhergehenden Ansprüche,
**dadurch gekennzeichnet, dass**
die Ansteuereinheit (10, 110) eine Eingabeeinheit (86, 186), wie ein, vorzugsweise zweihändig betätigbarer, fluidisch oder elektronisch arbeitender Tippsicherheitsschalter (87, 87'), umfasst, und
insbesondere durch einen Betätigungszustand (189) der Eingabeeinheit (86, 87, 87', 186), indem z. B. ein Stellsignal (190) an dem Fluidfreischaltventil (40, 140, 240) sekundärsteuerseitig (48, 148) anliegt, eine Stellungsänderung des Fluidfreischaltventils (40, 140, 240) initiierbar ist.

**8.** Halter (3, 3', 103, 203, 303, 303') nach einem der vorhergehenden Ansprüche,
**dadurch gekennzeichnet, dass**
die Ansteuereinheit (10, 110) mindestens ein, wie ein erstes und/oder ein zweites, vorzugsweise über die Ansteuereinheit (10, 110), betätigbares Bewegungsventil (78, 79) umfasst, das mindestens eine erste (81) und eine zweite Durchflussstellung (82) aufweist, wobei
vorzugsweise in der ersten Durchflussstellung (81) Fluid in die erste Steuerleitung (54) für einen Druckaufbau aus der Druckquelle (97, 197) gelangt und insbesondere in der zweiten Durchflussstellung (82) Fluid aus der ersten Steuerleitung (54) in ein Fluidreservoir (96), wie einen Vorratsbehälter, gelangt, wobei insbesondere in der zweiten Stellung (82) einem Fluidabfluss aus der ersten Steuerleitung (54) ein Staudruck (73) oder ein Verdrängungsdruck (74), insbesondere aus der Aufhaltekammer (24, 124, 224), entgegensteht.

**9.** Halter (3, 3', 103, 203, 303, 303') nach Anspruch 8,
**dadurch gekennzeichnet, dass**
wenigstens eines der vorhandenen Bewegungsventile (78, 79) mindestens über einen Schaltzustand (83, 84), wie einen ersten Schaltzustand (83) und einen zweiten Schaltzustand (84), verfügt, wobei in einem Schaltzustand (84), insbesondere in dem zweiten Schaltzustand (84), eine Druck- und/oder Steuersignalanpassung in einer Leitung, wie einer Steuerabzweigung (49, 49') oder einer ersten Steuerleitung (54), insbesondere auf ein Niederniveau, ermöglicht wird, wodurch eine Schaltvoraussetzung für das Fluidfreischaltventil (40, 140, 240), in seinen zweiten Zustand (42, 142) zu gelangen, gegeben ist.

**10.** Halter (3, 3', 103, 203, 303, 303') nach einem der vorhergehenden Ansprüche,
**dadurch gekennzeichnet, dass**
das Fluidfreischaltventil (40, 140, 240) eine Druckabbaustellung (45) aufweist, wobei insbesondere die Druckabbaustellung (45) einnehmbar ist, wenn eine Bewegungskammer (23, 223, 223') des Aktors (11, 13, 111, 211) in einer Spannkammergröße vorliegt, und ein Aufhaltedruck (68, 268) auf die erste Ventilsteuerleitung (51, 151, 251), insbesondere auf die Aufhaltekammer (68, 268), vorzugsweise durch mindestens eines der Bewegungsventile (78, 79) in einem ersten Schaltzustand (83), durchgeschaltet ist.

**11.** Halter (3, 3', 103, 203, 303, 303') nach einem der vorhergehenden Ansprüche,
**dadurch gekennzeichnet, dass**
der Ventilsteuerleitung, wie der ersten (51, 151, 251) und der zweiten Ventilsteuerleitung (52, 152), eine verschließbare Ableitungsöffnung (59) zugeordnet ist und insbesondere mindestens eine Stelldruckdifferenz an dem Fluidfreischaltventil (40, 140, 240), wobei ein ansteuerseitiger Fluiddruck gleich oder niedriger als der Schwellendruck ist und insbesondere ein sekundärsteuerseitiger Fluiddruck höher als ein zweiter Schwellendruck ist, ein Spanndruckschalten des Fluidfreischaltventils (40, 140, 240) erlaubt.

**12.** Halter (3, 3', 103, 203, 303, 303') nach einem der vorhergehenden Ansprüche,
**dadurch gekennzeichnet, dass**
mindestens ein Ventil, wie das Fluidfreischaltventil (40, 140, 240) oder das Bewegungsventil (78,79), vorzugsweise alle schaltbaren Ventile (40, 78, 79, 91, 92, 140, 191, 240), als 3/2-Ventiltyp ausgebildet ist, und insbesondere mindestens ein Ventil (40, 78, 79, 91, 92, 140, 191, 240) elektromagnetisch schaltbar und/oder vorzugsweise mindestens ein Ventil (40, 78, 79, 91, 92, 140, 191, 240) mechanisch schaltbar ist.

**13.** Halter (3, 3', 103, 203, 303, 303') nach einem der vorhergehenden Ansprüche,
**dadurch gekennzeichnet, dass**
das Fluidfreischaltventil (40, 140, 240) ein vorgesteuertes Ventil ist, das vorzugsweise mit einem, insbesondere federvorgespannten, Druckregelventil (85), vorzugsweise eingangsseitig, verbunden ist und insbesondere ausgangsseitig mit dem Aktor (11, 13, 111, 211), insbesondere mit der Spannkammer (22) des Aktors (11, 13, 111, 211), verbunden ist.

**14.** Halter (3, 3', 103, 203, 303, 303') nach einem der vorhergehenden Ansprüche,
**dadurch gekennzeichnet, dass**
mindestens ein erstes federvorgespanntes Schaltventil (91, 191) ansteuerseitig, insbesondere über ein Wechselventil und über die erste Ventilsteuerleitung (51, 151, 251), mit dem Fluidfreischaltventil (40, 140, 240) verbunden ist und insbesondere mindestens ein zweites federvorgespanntes Schaltventil (92) sekundärsteuerseitig über die zweite Ventilsteuerleitung (52, 152) mit dem Fluidfreischaltventil (40, 140, 240) verbunden ist, wobei
insbesondere eine erste Stellung (93), eine Vorzugsstellung, des ersten und/oder zweiten Schaltventils (91, 92, 191) eine Druckentlastungsstellung, wie eine Fluidablassstellung (93), bezüglich einer der Ventilsteuerleitungen (51, 52, 151, 152, 251) ist und eine zweite Stellung (94) des ersten und/oder zweiten Schaltventils (91, 92, 191) eine Druckdurchleitstellung, wie eine Fluideinlassstellung (94), bezüglich einer der Ventilsteuerleitungen (51, 52, 151, 152, 251) ist.

**15.** Materialprüfmaschine (1, 101, 201, 301), die einen Halter (3, 3', 103, 203, 303, 303') für Materialproben (99, 99', 199, 299, 399), insbesondere nach einem der vorhergehenden Ansprüche 1 bis 14, umfasst, wobei dem Halter (3, 3', 103, 203, 303, 303') ein druckbeaufschlagtes Fluid zur Vermittlung einer Spannkraft zuführbar ist,
**dadurch gekennzeichnet, dass**
von dem Halter (3, 3', 103, 203, 303, 303') in einem spannkraftfreien Zustand durch eine Bewegungseinheit, wie z. B. einen zweiten Aktor (12, 112) und/oder einen vierten Aktor (14, 214, 214'), eine Präferenzstellung einnehmbar ist, wobei ein, insbesondere auf maximal 150 N, begrenzter Sicherheitskraftvektor und/oder ein, insbesondere auf maximal $2\ \frac{N}{mm^2}$, begrenzter Schließdruck (269, 269') von einer Offenstellung (4) auf eine Schließstellung (5,105, 305, 305') des Halters (3, 3', 103, 203, 303, 303') hin gerichtet ist.

**16.** Verfahren zur Ansteuerung, insbesondere eines Halters (3, 3', 103, 203, 303, 303') mit einer Ansteuereinheit (10, 110) nach einem der Ansprüche 1 bis 14, vorzugsweise für einen Materialprobenhalter, wobei mindestens eine verbindende Druckmittelleitung (50), mindestens ein Aktor (11, 13, 111, 211) und mindestens ein bi-stabiles Fluidfreischaltventil (40, 140, 240) vorgesehen sind und
das Fluidfreischaltventil (40, 140, 240) an eine Druckquelle (97, 197) eines Fluids anschließbar ist und von dem Aktor (11, 13, 111, 211) eine Schließstellung (5, 105, 305, 305') einnehmbar ist,
**dadurch gekennzeichnet, dass**
in dem Aktor (11, 13, 111, 211) eine Sicherheitsschließkraft einem Aufhaltedruck (68, 268) entgegenwirkt,
wobei der Aufhaltedruck (68, 268) einen Schaltzustand (41, 42, 141, 142) des Fluidfreischaltventils (40, 140, 240) festlegt, und
wobei ein Aufbau eines Spanndrucks (70, 270), der in dem Aktor (11, 13, 111, 211) einer Richtung des Aufhaltedrucks (68, 268) entgegenwirkt, von der Druckquelle (97, 197) in dem Aktor (11, 13, 111, 211) durch das Fluidfreischaltventil (40, 140, 240), nach einem Abbau des Aufhaltedrucks (68, 268), insbesondere unter einen Schwellenwert, in der Schließstellung des Aktors (11, 13, 111, 211) vorgesehen ist, wobei die Ansteuereinheit (10, 110) eine Eingabeeinheit (86, 186) umfasst, die einen Durchleitungszustand des Fluidfreischaltventils (40, 140, 240) veranlasst.

## Claims

**1.** Holder (3, 3', 103, 203, 303, 303') with a control unit (10, 110), preferably in a material testing machine (1, 101, 201, 301) for material samples (99, 99', 199, 299, 399), comprising at least one actuator (11, 12, 13, 14, 111, 112, 211, 214, 214') configured for being loaded with fluid from a pressure source (97, 197), having at least one clamping piston (30, 30', 130, 230, 230', 330, 330', 330", 330"'),
wherein a bi-stable fluid control valve (40, 140, 240) is provided between the pressure source (97, 197) and the actuator (11, 12, 13, 14, 111, 112, 211, 214, 214'), which has at least one first state (41, 141), from which the fluid control valve (40, 140, 240) can be switched forth for taking a pressure build-up position (44), and a second state (42, 142), in which a pressure build-up in a clamping chamber (22) is enabled by connection of the pressure source (97, 197) to the clamping chamber (22),
**characterised in that**
the holder is designed in such a manner that
a closed position (5, 105) can be taken in the first state of the fluid control valve (40, 140, 240) by the actuator (11, 13, 111, 211) by means of the clamping piston (30, 30', 130, 230, 230', 330, 330', 330", 330"') and an actuating force (64, 164) from a second actuator (12, 14, 112, 214, 214'), which is connected to the clamping piston (30, 30', 130, 230, 230', 330, 330', 330", 330'"), on arrival in said position (5, 105), a pressure in a chamber (24, 124, 224) of the actuator (11, 13, 111, 211) is compared with a threshold pressure, and **in that** the fluid control valve (40, 140, 240) switches to the second state (42, 142) only then if a pressure reaches below a threshold pressure in a first valve control line (51, 151, 251), which is arranged to be supplied with pressure from the chamber (24, 124, 224) of the actuator (11, 13, 111, 211), and a switching signal is present at the fluid control valve (40, 140, 240) in a second valve control line (52, 152).

**2.** Holder (3, 3', 103, 203, 303, 303') according to claim 1,
**characterised in that**
the second actuator (12, 112) comprises an actuating force limiting unit 60, 260, 260'), which provides the actuating force (64, 164), in particular continuously, through which preferably a closed position (8) is possible on at least one clamping jaw (7, 207, 307, 307', 307", 307"'), such as a centering clamping jaw, of the holder (3, 3', 103, 203, 303, 303').

**3.** Holder (3, 3’, 103, 203, 303, 303’) according to claim 1 or claim 2,
**characterised in that**
the actuator (11, 13, 111, 211) comprises a linear cylinder (20) configured for being loaded with a source pressure having in particular at least one valve control line connection (26) at an end, wherein
in particular a fluid flow-off pressure (71, 72) of a holding chamber (24, 124, 224) of the linear cylinder (20) is present on the control side on the fluid control valve (40, 140, 240) through the first valve control line (51, 151, 251) and opposes taking the pressure build-up position (44) of the fluid control valve (40, 140, 240).

**4.** Holder (3, 3’, 103, 203, 303, 303’) according to one of the previous claims,
**characterised in that**
at least two actuators (11, 13, 111, 211), for example actuator pairs (15), such as the first (11, 111, 211) and a third actuator (13), are provided and at least one shuttle valve (65) is arranged downstream from the actuators (11, 13, 111, 211), in particular the first and third actuators (11, 13, 111, 211), and a highest possible fluid flow-off pressure of the actuators (11, 13, 111, 211), in particular of the actuator pair (15), is present on the fluid control valve (40, 140, 240) as set pressure through the shuttle valve (65), which is preferably a two-position check valve capable of being switched by pressure differences.

**5.** Holder (3, 3’, 103, 203, 303, 303’) according to one of the previous claims,
**characterised in that**
the clamping piston (30, 30’, 130, 230, 230’, 330, 330’, 330", 330"’) has a hold-open face (232) configured for being loaded with pressure, wherein an actuation face (233), which is configured for being loaded with pressure, of the clamping piston (30, 30’, 130, 230, 230’, 330, 330’, 330", 330’") is relieved of fluid pressure in a hold-open position of the clamping piston (30, 30’, 130, 230, 230’, 330, 330’, 330", 330"’) through the fluid discharge line (58, 58’) and in particular the hold-open face (232) is loaded with fluid pressure.

**6.** Holder (3, 3’, 103, 203, 303, 303’) according to one of the previous claims,
**characterised in that**
a closing force-limited spring (62, 262) and/or a closing force-limited fluid pressure cylinder unit (263) is allocated to the clamping piston (30, 30’, 130, 230, 230’, 330, 330’, 330", 330"’) at least on one side, in particular on the side of the actuation face, through which the clamping piston (30, 30’, 130, 230, 230’, 330, 330’, 330", 330’") is in particular moveable with a closing force of no more than 150 Newton and/or a closing pressure (269, 269’) of no more than

$$2\ \frac{N}{mm^2}.$$

**7.** Holder (3, 3’, 103, 203, 303, 303’) according to one of the previous claims,
**characterised in that**
the control unit (10, 110) comprises an input unit (86, 186), such as a fluidly or electronically functioning tip safety switch (87, 87’), preferably capable of being operated with two hands, and
a positioning change of the fluid control valve (40, 140, 240) can be initiated in particular by an activation status (189) of the input unit (86, 87, 87’, 186), for example, by a control signal (190) provided on the secondary control side (48, 148) of the fluid control valve (40, 140, 240).

**8.** Holder (3, 3’, 103, 203, 303, 303’) according to one of the previous claims,
**characterised in that**
the control unit (10, 110) comprises at least one, such as a first and/or a second, motion valve (78, 79), which has at least a first (81) and a second flow-through position (82), configured for being operated preferably via the control unit (10, 110), wherein, preferably in the first flow-through position (81), fluid enters into the first control line (54) for a pressure build-up from the pressure source (97, 197) and, in particular in the second flow-through position (82), fluid from the first control line (54) enters into a fluid reservoir (96), such as a supply tank, wherein, in particular in the second position (82), a back pressure (73) or a displacement pressure (74), in particular from the holding chamber (24, 124, 224), obstructs a flow discharge.

**9.** Holder (3, 3’, 103, 203, 303, 303’) according to claim 8,
**characterised in that**
at least one of the motion valves (78, 79) has at least one switching state (83, 84), such as a first switching state (83) and a second switching state (84), wherein in a switching state (84), in particular in the second switching state (84), a pressure and/or control signal adjustment is enabled in a line, such as a control branch line (49, 49’) or a first control line (54), in particular at a low level, through which a switching condition is specified for the fluid control valve (40, 140, 240) in order for it to reach its second state (42, 142).

10. Holder (3, 3', 103, 203, 303, 303') according to one of the previous claims,
**characterised in that**
the fluid control valve (40, 140, 240) has a pressure decrease position (45), wherein in particular the pressure decrease position (45) can be assumed if a motion chamber (23, 223, 223') of the actuator (11, 13, 111, 211) is present in a clamping chamber size, and a hold-open pressure (68, 268) is switched through to the first valve control line (51, 151, 251), in particular to the hold-open chamber (68, 268), preferably by at least one of the motion valves (78, 79) in a first switching state (83).

11. Holder (3, 3', 103, 203, 303, 303') according to one of the previous claims,
**characterised in that**
a closable discharge opening is allocated to the valve control line, such as the first (51, 151, 251) and the second valve control line (52, 152), and in particular at least one actuation pressure difference on the fluid control valve (40, 140, 240) enables a switching of clamping pressure of the fluid control valve (40, 140, 240), wherein a fluid pressure on the control side is equal to or lower than the threshold pressure and in particular a fluid pressure on the secondary control side is greater than a second threshold pressure.

12. Holder (3, 3', 103, 203, 303, 303') according to one of the previous claims,
**characterised in that**
at least one valve, such as the fluid control valve (40, 140, 240) or the motion valve (78, 79), preferably all switchable valves (40, 78, 79, 91, 92, 140, 191, 240), is designed as a 3/2 valve type, and in particular at least one valve (40, 78, 79, 91, 92, 140, 191, 240) can be switched electromagnetically and/or preferably at least one valve (40, 78, 79, 91, 92, 140, 191, 240) can be switched mechanically.

13. Holder (3, 3', 103, 203, 303, 303') according to one of the previous claims,
**characterised in that**
the fluid control valve (40, 140, 240) is a pilot-controlled valve, which is preferably connected to an, in particular spring pre-loaded, pressure regulation valve (85), preferably on the inlet side, and in particular on the outlet side connected to the actuator (11, 13, 111, 211), in particular to the clamping chamber (22) of the actuator (11, 13, 111, 211).

14. Holder (3, 3', 103, 203, 303, 303') according to one of the previous claims,
**characterised in that**
at least a first spring pre-loaded switch valve (91, 191) is connected to the fluid control valve (40, 140, 240) on the control side, in particular via a shuttle valve and via the first valve control line (51, 151, 251), and in particular at least a second spring pre-loaded switch valve (92) is connected to the fluid control valve (40, 140, 240) on the secondary control side via the second valve control line (52, 152), wherein
in particular a first position (93), a preferred position, of the first and/or the second switch valve (91, 92, 191) is a pressure relief position, such as a fluid discharge position (93), with respect to one of the valve control lines (51, 52, 151, 152, 251), and a second position (94) of the first and/or the second switch valve (91, 92, 191) is a pressure passing position, such as a fluid inlet position (94), with respect to one of the valve control lines (51, 52, 151, 152, 251).

15. Material testing machine (1, 101, 201, 301) comprising a holder (3, 3', 103, 203, 303, 303') for material samples (99, 99', 199, 299, 399), in particular according to one of the previous claims 1 to 14, wherein the holder (3, 3', 103, 203, 303, 303') is configured for being fed with a fluid loaded with pressure for establishing a clamping force,
**characterised in that**
a preferred position can be assumed by the holder (3, 3', 103, 203, 303, 303') in a state void of clamping force through a motion unit, such as a second actuator (12, 112) and/or a fourth actuator (14, 214, 214'), wherein a safety force vector, which is in particular limited to a maximum of 150 N, and/or a closing pressure (269, 269'), which is in particular limited to a maximum of $2\ \frac{N}{mm^2}$, is directed from an open position (4) to a closed position (5, 105, 305, 305') of the holder (3, 3', 103, 203, 303, 303').

16. Method for controlling, in particular of a holder (3, 3', 103, 203, 303, 303') with a control unit (10, 110) according to one of the claims 1 to 14, preferably for a material sample holder, wherein at least one connecting line (50) for a pressure medium, at least one actuator (11, 13, 111, 211), and at least one bi-stable fluid control valve (40, 140, 240) are provided, and the fluid control valve (40, 140, 240) is configured for being connected to a pressure source (97, 197) of a fluid and a closed position (5, 105, 305, 305') can be assumed by the actuator (11, 13, 111, 211),
**characterised in that**
a safety closing force in the actuator (11, 13, 111, 211) counteracts a hold-open pressure (68, 268),
wherein the hold-open pressure (68, 268) determines a switching state (41, 42, 141, 142) of the fluid control valve (40, 140, 240), and
wherein a build-up of clamping pressure (70, 270), which counteracts a direction of the hold-open pressure (68, 268) in the actuator (11, 13, 111, 211), is provided in the actuator (11, 13, 111, 211) in the closed position of the actuator (11, 13, 111, 211) from the pressure source (97, 197) through the fluid control valve (40, 140, 240) following a decrease of the hold-open pressure (68, 268), in particular below a threshold value, wherein the control unit (10, 110) comprises an input unit (86, 186), which initiates a transmission state of the fluid control valve (40, 140, 240).

## Revendications

1. Support (3, 3', 103, 203, 303, 303') avec unité de commande (10, 110), de préférence dans une machine d'essais des matériaux (1, 101, 201, 301) pour des échantillons de matériaux (99, 99', 199, 299, 399), comprenant au moins un actionneur (11, 12, 13, 14, 111, 112, 211, 214, 214'), pouvant être sollicité en pression avec un fluide provenant d'une source de pression (97, 197), avec au moins un piston de serrage (30, 30', 130, 230, 330, 330', 330", 330"'), une soupape bistable de déblocage de fluide (40, 140, 240) étant prévue entre la source de pression (97, 197) et l'actionneur (11, 12, 13, 14, 111, 112, 211, 214, 214'), soupape qui présente au moins un premier état (441, 141) à partir duquel la soupape de déblocage de fluide (40, 140, 240) peut être commutée pour prendre une position de montée en pression (44) et un second état (42, 142) dans lequel une montée en pression dans une chambre de serrage (22) est rendue possible par la connexion de la source de pression (97, 197) à la chambre de serrage (22), **caractérisé en ce que** le support est configuré de telle manière que, dans le premier état de la soupape de déblocage de fluide (40, 140, 240), une position de fermeture (5, 105) peut être prise par l'actionneur (11, 13, 111, 211) au moyen du piston de serrage (30, 30', 130, 230, 330, 330', 330", 330"') et d'une force de réglage (64, 164) d'un second actionneur (12, 14, 112, 214, 214') qui est raccordé au piston de serrage (30, 30', 130, 230, 330, 330', 330", 330"'), position de fermeture pour laquelle, lorsqu'elle est atteinte dans une chambre (24, 124, 224) de l'actionneur (11, 13, 111, 211), une pression est comparée à une pression seuil et que la soupape de déblocage de fluide (40, 140, 240) ne passe dans le second état (42, 142) que lorsque la valeur est tombée au-dessous de la pression seuil dans une première conduite de commande de soupape (51, 151, 251) qui peut être alimentée en pression par la chambre (24, 124, 224) de l'actionneur (11, 13, 111, 211) et qu'un signal de commutation se trouve au niveau de la soupape de déblocage de fluide (40, 140, 240) dans une seconde conduite de commande de soupape (52, 152).

2. Support (3, 3' ; 103, 203, 303, 303') selon la revendication 1, **caractérisé en ce que** le second actionneur (12, 112) comprend une unité de limitation de la force de réglage (60, 260, 260') qui met à disposition la force de réglage (64, 164), en particulier en continu, par laquelle de préférence une position de fermeture (8) peut être prise sur au moins une mâchoire de serrage (7, 207, 307, 307', 307", 307"'), comme une mâchoire de serrage de centrage, du support (3, 3' ; 103, 203, 303, 303').

3. Support (3, 3' ; 103, 203, 303, 303') selon la revendication 1 ou la revendication 2, **caractérisé en ce que** l'actionneur (11, 13, 111, 211) comprend un vérin linéaire (20), pouvant être sollicité par une pression de source, qui présente en particulier au moins un raccord de conduite de commande de soupape (26) à une extrémité, cependant qu'en particulier une pression de sortie d'écoulement du fluide (71, 72) d'une chambre de maintien en position ouverte (24, 124, 224) du cylindre linéaire (20) se trouve, par la première conduite de commande de soupape (51, 151, 251), au niveau de la soupape de déblocage de fluide (40, 140, 240) côté commande et s'oppose à la position de montée en pression (44) de la soupape de déblocage de fluide (40, 140, 240).

4. Support (3, 3' ; 103, 203, 303, 303') selon l'une des revendications précédentes, **caractérisé en ce qu'**il est prévu au moins deux actionneurs (11, 13, 111, 211), par exemple des paires d'actionneurs (15) comme le premier actionneur (11, 111, 211) et un troisième actionneur (13) et qu'au moins une soupape de commutation (65) est placée en aval des actionneurs (11, 13, 111, 211), en particulier du premier et du troisième, côté sortie d'écoulement du fluide et qu'une pression maximale de sortie d'écoulement de fluide des actionneurs (11, 13, 111, 211), en particulier de la paire d'actionneurs (15), se trouve en tant que pression de commande au niveau de la soupape de déblocage de fluide (40, 140, 240) grâce à la soupape de commutation (65) qui est, de préférence, une soupape antiretour à deux positions pouvant être commutée par des différences de pression.

5. Support (3, 3' ; 103, 203, 303, 303') selon l'une des revendications précédentes, **caractérisé en ce que** le piston de serrage (30, 30', 130, 230, 330, 330', 330", 330"') présente une surface de maintien en position ouverte pouvant être sollicitée en pression (232), cependant que, dans une position de maintien en position ouverte du piston de serrage (30, 30', 130, 230, 330, 330', 330", 330"'), une surface d'entraînement pouvant être sollicitée en pression (233) du piston de serrage (30, 30', 130, 230, 330, 330', 330", 330"') est dépressurisée pour ce qui est de la pression de fluide par une conduite de sortie de fluide (58, 58') et en particulier la surface de maintien en position ouverte (232) est sollicitée par la pression de fluide.

6. Support (3, 3' ; 103, 203, 303, 303') selon l'une des revendications précédentes, **caractérisé en ce qu'**un ressort à force de fermeture limitée (62, 262) et/ou une unité de cylindre de pression de fluide limitant la force de fermeture (263) est associée au piston de serrage (30, 30', 130, 230, 330, 330', 330", 330"') au moins d'un côté, en particulier du côté de la surface d'entraînement, si bien que le piston de serrage (30, 30', 130, 230, 330, 330', 330", 330"') peut être déplacé en particulier avec une force de fermeture de 150 Newton maximum et/ou une pression de fermeture (269, 269') allant jusque $2\ \frac{N}{mm^2}$.

7. Support (3, 3' ; 103, 203, 303, 303') selon l'une des revendications précédentes, **caractérisé en ce que** l'unité de commande (10, 110) comprend une unité d'entrée (86, 186) comme un interrupteur de sécurité tactile (87, 87'), de préférence pouvant être actionné à deux mains, fonctionnant avec un fluide ou de manière électronique, et qu'une modification de position de la soupape de déblocage de fluide (40, 140, 240) peut être initiée en particulier par un état d'actionnement (189) de l'unité d'entrée (86, 87, 87', 186), un signal de commande (190) se trouvant par exemple, au niveau de la soupape de déblocage de fluide (40, 140, 240) sur le côté de commande secondaire (48, 148).

8. Support (3, 3' ; 103, 203, 303, 303') selon l'une des revendications précédentes, **caractérisé en ce que** l'unité de commande (10, 110) comprend une soupape de déplacement (78, 79), comme une première et/ou une seconde soupape de déplacement, qui peut être actionnée de préférence par l'unité de commande (10, 110), qui présente au moins une première position de passage (81) et une seconde position de passage (82), cependant que dans la première position de passage (81) du fluide arrive de préférence dans la première conduite de commande (54) pour une montée de pression à partir de la source de pression (97, 197) et, en particulier dans la seconde position de passage (82), du fluide provenant de la première conduite de commande (54) arrive dans un réservoir de fluide (96) comme un réservoir de stockage, une pression de retenue (73) ou une pression de refoulement (74), en particulier de la chambre de maintien en position ouverte (24, 124, 224) s'opposant, en particulier dans la seconde position (28) à une évacuation de fluide de la première conduite de commande (54).

9. Support (3, 3' ; 103, 203, 303, 303') selon la revendication 8, **caractérisé en ce qu'**au moins l'une des soupapes de déplacement existantes (78, 79) dispose au moins d'un état de commutation (83, 84) comme un premier état de commutation (83) et un second état de commutation (84), cependant que dans un état de commutation (84), en particulier dans le second état de commutation (84), une adaptation de pression et/ou de signal de commande est rendue possible dans une conduite comme un branchement de commande (49, 49') ou une première conduite de commande (54), en particulier à un niveau bas, si bien qu'une condition de commutation est donnée pour que la soupape de déblocage de fluide (40, 140, 240) arrive dans son second état (42, 142).

10. Support (3, 3' ; 103, 203, 303, 303') selon l'une des revendications précédentes, **caractérisé en ce que** la soupape de déblocage de fluide (40, 140, 240) présente une position de réduction de pression (45), la position de réduction de pression (45) pouvant être prise en particulier lorsqu'une chambre de déplacement (23, 223, 223') de l'actionneur (11, 13, 111, 211) existe dans une grandeur de la chambre de serrage et qu'une pression de maintien en position ouverte (68, 268) est commutée sur la première conduite de commande de soupape (51, 151, 251), en particulier sur la chambre de maintien en position ouverte (68, 268), de préférence par au moins l'une des soupapes de déplacement (78, 79) dans un premier état de commutation (83).

11. Support (3, 3' ; 103, 203, 303, 303') selon l'une des revendications précédentes, **caractérisé en ce qu'**une ouverture d'écoulement pouvant être fermée (59) est associée à la conduite de commande de soupape, comme la première conduite de commande de soupape (51, 151, 251) et la seconde conduite de commande de soupape (52, 152), et permet en particulier au moins une différence de pression de commande au niveau de la soupape de déblocage de fluide (40, 140, 240), une pression de fluide côté commande étant égale ou inférieure à la pression seuil et en particulier une pression de fluide côté commande secondaire étant supérieure à une seconde pression seuil, permettant une commutation de la pression de serrage de la soupape de déblocage de fluide (40, 140, 240).

12. Support (3, 3' ; 103, 203, 303, 303') selon l'une des revendications précédentes, **caractérisé en ce qu'**au moins une soupape comme la soupape de déblocage de fluide (40, 140, 240) ou la soupape de déplacement (78, 79), de préférence toutes les soupapes pouvant être commutées (40, 78, 79, 91, 92, 140, 191, 240), étant configurées comme des soupapes de type à 3/2 voies et qu'en particulier au moins une soupape (40, 78, 79, 91, 92, 140, 191, 240) peut être commutée de manière électromagnétique et/ou que de préférence au moins une soupape (40, 78, 79, 91, 92, 140, 191, 240) peut être commutée de manière mécanique.

13. Support (3, 3' ; 103, 203, 303, 303') selon l'une des revendications précédentes, **caractérisé en ce que** la soupape de déblocage de fluide (40, 140, 240) est une soupape commandée par pilote qui est reliée de préférence à une soupape de régulation de pression (85), en particulier précontrainte par un ressort, de préférence côté entrée et qui est reliée, de préférence côté sortie, à l'actionneur (11, 13, 111, 211), en particulier à la chambre de serrage (22) de l'actionneur (11, 13, 111, 211).

14. Support (3, 3' ; 103, 203, 303, 303') selon l'une des revendications précédentes, **caractérisé en ce qu'**au moins une première soupape de commutation précontrainte par un ressort (91, 191) est reliée côté commande à la soupape de déblocage de fluide (40, 140, 240) en particulier par une soupape de commutation et par la première conduite de commande de soupape (51, 151, 251) et qu'en particulier au moins une seconde soupape de commutation précontrainte par un ressort (92) est reliée côté commande secondaire à la soupape de déblocage de fluide (40, 140, 240) par la seconde conduite de commande de soupape (52, 152), en particulier une première position (93), une position préférée de la première soupape de commutation et/ou de la seconde soupape de commutation (91, 92, 191) étant une position de décompression comme une position d'évacuation de fluide (93) par rapport à l'une des conduites de commande de soupape (51, 52, 151, 152, 251) et une seconde position (94) de la première soupape de commutation et/ou de la seconde soupape de commutation (91, 92, 191) étant une position de passage de pression comme une position d'entrée de fluide (94) par rapport à l'une des conduites de commande de soupape (51, 52, 151, 152, 251).

15. Machine d'essais des matériaux (1, 101, 201, 301) qui comprend un support (3, 3' ; 103, 203, 303, 303') pour des échantillons de matériaux (99, 99', 199, 299, 399), en particulier selon l'une des revendications précédentes 1 à 14, un fluide sollicité en pression pouvant être amené au support (3, 3', 103, 203, 303, 303') pour communiquer une force de serrage, **caractérisée en ce qu'**une position de préférence peut être prise par le support (3, 3' ; 103, 203, 303, 303') dans un état exempt de force de serrage par une unité de déplacement comme, par exemple un second actionneur (12, 112) et/ou un quatrième actionneur (14, 214, 214'), cependant qu'un vecteur de force de sécurité limité en particulier à 150 N maximum et/ou une pression de fermeture (269, 269') limitée en particulier à $2 \frac{N}{mm^2}$ maximum est dirigée d'une position ouverte (4) à une position de fermeture (5, 105, 305, 305') du support (3, 3' ; 103, 203, 303, 303').

16. Procédé pour la commande, en particulier d'un support (3, 3' ; 103, 203, 303, 303') avec une unité de commande (10, 110) selon l'une des revendications 1 à 14, de préférence pour un support d'échantillons de matériaux, au moins une conduite de raccordement de fluide sous pression (50), au moins un actionneur (11, 13, 111, 211) et au moins une soupape bistable de déblocage de fluide (40, 140, 240) étant prévus et la soupape de déblocage de fluide (40, 140, 240) pouvant être raccordée à une source de pression (97, 197) d'un fluide et une position de fermeture (5, 105, 305, 305') pouvant être prise par l'actionneur (11, 13, 111, 211), **caractérisé en ce qu'**une force de fermeture de sécurité s'oppose dans l'actionneur (11, 13, 111, 211) à une pression de maintien en position ouverte (68, 268), la pression de maintien en position ouverte (68, 268) fixant un état de commutation (41, 42, 141, 142) de la soupape de déblocage de fluide (40, 140, 240) et une montée en pression d'une pression de serrage (70, 270), qui s'oppose dans l'actionneur (11, 13, 111, 211) à une direction de la pression de maintien en position ouverte (68, 268), étant prévue de la source de pression (97, 197) dans l'actionneur (11, 13, 111, 211) par la soupape de déblocage de fluide (40, 140, 240) après une réduction de la pression de maintien en position ouverte (68, 268), en particulier en dessous d'une valeur de seuil, dans la position de fermeture de l'actionneur (11, 13, 111, 211), l'unité de commande (10, 110) comprenant une unité d'entrée qui déclenche un état de passage de la soupape de déblocage de fluide (40, 140, 240).

1
3
3'
10
15
11
12
24
4
30
7
5
8
99
28
70
62
13
14
61
30'
99'
17
23
22
20
26
64
18
38
68
60
52
40
53
41
54
66
72
44
42
45
47
71
51
65
57
48
76
27
58'
55
74
49'
73
79
58
96
68
87'
88'
86
87
92
88
91
94
96
93
59
85
97
50
96
75
88''
83
81
78
84
96
82
49
71

Fig. 1

101
103
110
161
130
111
112
147
164
142
124
105
157
152
148
140
141
151
199
PC
t1 0
186
190
189
191
197

Fig. 2

201
230'
295
260'
223'
263
262
260
238
280
233
269
214
261
298
269'
214'
223
234
270
228
211
232
268
224
250
230
207
298'
203
234'
299
251
240

Fig. 3

306
309''
303'
330''
330'''
307''
399
307'''
305'
307
305
308
307'
330'
330
303
309'
302'
302
309
301

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2677296 A2
- DE 112009005323 B4
- DE 112006003923 B4
- DE 102009036247 A1
- DE 102012101459 A1
- EP 2631496 A2
- DE 3912075 A1
- CN 101608987 A1
- DE 2839341 C3
- DE 4228846 C2
- DE 2158700 A
- DE 1552653 C
- US 2805447 A
- DE 2229538
- DE 10161703 B4